(19)

Europäisches
Patentamt
European
Patent Office
Office européen
des brevets

(11) **EP 4 460 047 A1**

(12) **EUROPEAN PATENT APPLICATION**
published in accordance with Art. 153(4) EPC

(43) Date of publication:
**06.11.2024 Bulletin 2024/45**

(21) Application number: **23745997.9**

(22) Date of filing: **13.01.2023**

(51) International Patent Classification (IPC):
**H04W 4/02** *(2018.01)*

(52) Cooperative Patent Classification (CPC):
**H04W 4/02; H04W 4/029; H04W 64/00**

(86) International application number:
**PCT/CN2023/072038**

(87) International publication number:
**WO 2023/143114 (03.08.2023 Gazette 2023/31)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.01.2022 CN 202210114728**

(71) Applicant: **Huawei Technologies Co., Ltd.
Shenzhen, Guangdong 518129 (CN)**

(72) Inventors:
• **LIU, Mengting
Shenzhen, Guangdong 518129 (CN)**
• **SHANG, Shunshun
Shenzhen, Guangdong 518129 (CN)**
• **LI, Dejian
Shenzhen, Guangdong 518129 (CN)**
• **GAO, Xin
Shenzhen, Guangdong 518129 (CN)**

(74) Representative: **Pfenning, Meinig & Partner mbB
Patent- und Rechtsanwälte
Theresienhöhe 11a
80339 München (DE)**

(54) **COMMUNICATION METHOD AND COMMUNICATION APPARATUS**

(57)     Embodiments of this application provide a communication method and a communication apparatus. The communication method includes: A positioning module positions a target terminal device based on first information and/or second information, where the first information includes one or more of carrier phase measurement information of P second signals received by a first device on N frequency resources, the second information includes one or more of carrier phase measurement information of M first signals received by a second device on the N frequency resources, and N, M, and P are positive integers. According to the method, errors including a synchronization error between a receiver and a transmitter, a phase difference between different carriers/channels, and a phase difference between a local oscillator signal of the receiver and a local oscillator signal of the transmitter can be eliminated by sending signals in a round-trip manner. In this way, a problem of phase inconsistency between reference signals received by the receiver can be effectively resolved, and high-precision positioning can be implemented.

FIG. 2(a)

| First device | | Second device |
|---|---|---|
| | S201b: M first signals sent on N frequency resources → | |
| | ← S202b: P second signals received on the N frequency resources | |
| | S203b: First information → | |
| | | S204b: Perform positioning |

**FIG. 2(b)**

| First device | | Second device |
|---|---|---|
| | S201c: M first signals sent on N frequency resources → | |
| | ← S202c: P second signals received on the N frequency resources | |
| | ← S203c: Second information | |
| S204c: Perform positioning | | |

**FIG. 2(c)**

**Description**

This application claims priority to Chinese Patent Application No. 202210114728.1, filed with the China National Intellectual Property Administration on January 30, 2022 and entitled "COMMUNICATION METHOD AND COMMUNICATION APPARATUS", which is incorporated herein by reference in its entirety.

**TECHNICAL FIELD**

Embodiments of this application relate to the communication field, and more specifically, to a communication method and a communication apparatus.

**BACKGROUND**

With development of the internet of things, data and intelligence are increasingly involved in a future definition of the industry. Precise location services play an irreplaceable role in the development of the internet of things, and the industry has increasingly high requirements for high-precision positioning. High-precision positioning is required in scenarios such as industrial-grade precision industries, automated guided vehicle (automated guided vehicle, AGV) navigation, and autonomous driving. Therefore, how to implement high-precision positioning is an important problem that needs to be resolved at a current stage.

**SUMMARY**

In view of this, embodiments of this application provide a communication method and a communication apparatus. According to the method, a problem that phases of reference signals received by a receiver are inconsistent can be resolved. This implements high-precision positioning.

According to a first aspect, a communication method is provided. The method includes: A first device sends M first signals on N frequency resources. The first device receives, on the N frequency resources, P second signals sent by a second device, where the P second signals are signals responding to the M first signals. The first device sends first information, where the first information includes one or more of carrier phase measurement information of the P second signals, the carrier phase measurement information of the P second signals is used for positioning or location calculation, N, M, and P are positive integers, M is greater than or equal to N, and P is greater than or equal to N.

An implementation in which the first device sends the M first signals on the N frequency resources and the first device receives the P second signals on the N frequency resources is: sending the first signals and receiving the second signals alternately and in a round-trip manner. For example, the first device sends a reference signal $S_1$ (belonging to the M first signals) on a frequency resource $f_1$, the first device sends a reference signal $S_2$ (belonging to the M first signals) on a frequency resource $f_2$ after receiving a reference signal $W_1$ (belonging to the P second signals) sent by the second device, and then the first device receives a reference signal $W_2$ (belonging to the P second signals) sent by the second device. This is performed alternately until the first device sends an $M^{th}$ reference signal $S_M$ and receives a $P^{th}$ reference signal $W_P$. In addition, both the M first signals and the P second signals in this application are applicable to this explanation. A unified description is provided herein. For brevity, when the M first signals and the P second signals appear again, details are not described again.

It should be understood that, in this embodiment of this application, the P second signals are sent by the second device in response to the M first signals. Optionally, for example, after sending the reference signal $S_1$ (belonging to the M first signals) on the frequency resource $f_1$, the first device receives the reference signal $W_1$ (belonging to the P second signals) sent by the second device. The reference signal $W_1$ is sent by the second device on the frequency resource $f_1$ when or after the second device receives the first signal $S_1$. In addition, P second signals appearing in other places of this application are also applicable to this explanation. For brevity, when the P second signals appear again, details are not described.

It should be understood that, in this embodiment of this application, a value relationship between M and P is not limited. M may be greater than P, M may be less than P, or M may be equal to P.

For example, the first device sends the M first signals, and the second device sends the P second signals to the first device in response to the M first signals. It is assumed that M>P. If the first device sends three first signals, the second device returns only two second signals (for example, only two of the first signals are received due to link quality) in response to the three first signals. In this case, a positioning module uses only carrier phase measurement information of the two second signals and carrier phase measurement information of the two first signals responding to the second signals. In other words, when performing positioning, the positioning module performs positioning or location calculation based on the carrier phase measurement information of the two second signals and the carrier phase measurement information of the two first signals responding to the second signals. In addition, the relationship between M and P is applicable throughout this application, and is uniformly described herein. When the relationship appears again, details are not described again. The first device sends the first signals, and the second device sends the second signals to the first device after receiving the first signals. A sending process of the signals may be interpreted as "round-trip sending".

"Positioning" in this embodiment of this application may be calculation of one or more of geographical location information of the first device, information about a distance between the first device and the second device or another terminal/network device, angle information of the first device (for example, an angle of a connection line between the first device and the second device or the another terminal/network device), and posture information (for example, an orientation) of the first device, or may be calculation of another location-related parameter or information. This is not limited in this application. In addition, an explanation of "positioning" appearing below is the same as this explanation, and is uniformly described herein. When "positioning" appears again, details are not described again.

The foregoing "frequency resource" is a segment of contiguous spectrum resources in frequency domain, and may include one or more of a subcarrier, a resource block (resource block, RB), a bandwidth part (bandwidth part, BWP), a component carrier (component carrier, CC), a frequency band or frequency segment (band, for example, a frequency band/frequency segment n41 (2515 MHz to 2675 MHz)), a frequency layer (frequency layer), a frequency point (frequency point), and a frequency range (frequency range, FR).

Optionally, when the first device sends one first signal on each frequency resource, M is equal to N.

Optionally, when the N frequency resources belong to one frequency segment (in other words, when N=1), the first device may send a plurality of (M>1) reference signals on the frequency segment. Therefore, in this case, M is greater than N.

Optionally, when the N frequency resources are N subcarriers (in other words, when N>1), the first device may send a single (M=1) reference signal on the N subcarriers. Therefore, in this case, M is less than N.

The M first signals are used for positioning, and the M first signals include one or more of a positioning reference signal PRS, a sounding reference signal SRS, a positioning sounding reference signal pos-SRS, a tracking reference signal (tracking reference signal, TRS), a channel state information-reference signal (channel state information-reference signal, CSI-RS), a demodulation reference signal (demodulation reference signal, DMRS), a phase tracking reference signal (phase noise tracking reference signal, PTRS), and a sidelink reference signal. Optionally, the P second signals are used for positioning, and the P second signals include one or more of a positioning reference signal PRS, a sounding reference signal SRS, a positioning sounding reference signal pos-SRS, a tracking reference signal (tracking reference signal, TRS), a channel state information-reference signal (channel state information-reference signal, CSI-RS), a demodulation reference signal (demodulation reference signal, DMRS), a phase tracking reference signal (phase noise tracking reference signal, PTRS), and a sidelink reference signal.

Optionally, the M first signals and/or the P second signals may alternatively be other signals. This is not limited in this application.

Optionally, the first device may be a terminal device, or the first device may be a base station.

In a possible implementation, the first device sends the first information. When the first device is the terminal device, the first device may send the first information to a network device (for example, a location management network element (for example, an LMF network element)) by using an LTE positioning protocol (LTE positioning protocol, LPP) message, to provide a basis for the network device to perform positioning, or the first device may send the first information to a base station (for example, a gNB or an ng-eNB) by using a radio resource control (radio resource control, RRC) message. When the first device is the base station, the first device may send the first information by using an NR positioning protocol annex (NR positioning protocol annex, NRPPa) message. In addition, the first device may alternatively send the first information by using another message. This is not limited in this application.

In this embodiment of this application, various errors including a synchronization error between a receiver and a transmitter, a phase difference between different carriers/channels, and a phase difference between a local oscillator (local oscillator, LO) signal of the receiver and a local oscillator signal of the transmitter can be eliminated by sending signals in a round-trip manner (for example, in the foregoing description, the first device sends the first signals, and the second device sends the second signals to the first device after receiving the first signals). In this way, a problem of phase inconsistency between reference signals received by the receiver can be effectively resolved, and high-precision positioning can be implemented.

With reference to the first aspect, in some implementations of the first aspect, the carrier phase measurement information of the P second signals includes a measured carrier phase value or an estimated carrier phase value of one or more second signals in the P second signals received on the N frequency resources; and/or when N is greater than 1, the carrier phase measurement information of the P second signals includes a difference between measured carrier phase values or estimated carrier phase values of one or more second signals, in the P second signals, received by the first device on any two frequency resources in the N frequency resources.

Optionally, an example in which the first device is the terminal device is used. The terminal device measures the one or more second signals in the P second signals received on the N frequency resources $f_1$, $f_2$, ..., and $f_N$, to obtain corresponding carrier phase measurement information. Optionally, the carrier phase measurement information of the one or more second signals in the P second signals is the measured carrier phase value or the estimated carrier phase value of the one or more second signals in the P second signals, for example, $\varphi(u, 1)$, $\varphi(u, i)$, ..., and $\varphi(u, j)$, where i and j are less than or equal to M, and $\varphi(u, i)$ is a measured carrier phase value or an estimated carrier phase value obtained by the terminal device by measuring a second signal (belonging to the P second signals) received on an $i^{th}$ frequency resource $f_i$. In addition, this explanation is applicable to the full text of this application document. When related content appears again, for brevity, details are not described again.

Optionally, an example in which the first device is the terminal device is used. The terminal device obtains, through measurement, a difference between measured carrier phase values or estimated carrier phase values of one or more second signals, in the P second signals, received by the terminal device on any two frequency resources in the N frequency resources $f_1$, $f_2$, ..., and $f_N$, for example, $\varphi(u, 3)-\varphi(u, 1)$, $\varphi(u, 5)-\varphi(u, 2)$, $\varphi(u, i)-\varphi(u, j)$, ..., where i and j are less than or equal to M. In addition, this explanation is applicable to the full text of this application document. When related content appears again, for brevity, details are not described again.

Optionally, in this implementation, the first device may be one or more antennas in a plurality of antennas of the first device. Because spatial locations of different antennas are different, measured carrier phase values or estimated carrier phase values of the M first signals and/or measured carrier phase values or estimated carrier phase values of the P second signals that are obtained on the plurality of antennas may be different.

In this embodiment of this application, the carrier phase measurement information of the P second signals may include the measured carrier phase values of the P second signals, and the measured values may be directly obtained by the first device through measurement. Alternatively, the carrier phase measurement information of the P second signals may include the estimated carrier phase values of the P second signals. For example, the estimated value may be an integrated value obtained after a plurality of measured values are processed according to some algorithms, or an integrated value obtained after measured values of the plurality of antennas are comprehensively considered, so that more accurate information about the measured values can be provided. Alternatively, the carrier phase measurement information of the P second signals may include the measured carrier phase values and the estimated carrier phase values of the P second signals. In this way, the positioning module can obtain more measurement information. This further improves accuracy and robustness of positioning performance.

In addition, when N is greater than 1, the carrier phase measurement information of the P second signals may alternatively include a difference between the measured carrier phase values of the P second signals and/or a difference between the estimated carrier phase values of the P second signals. The difference between the measured carrier phase values of the P second signals and/or the difference between the estimated carrier phase values of the P second signals are/is parameters/a parameter directly required by the positioning module in a positioning process. In this way, signaling overheads can be effectively reduced, and no additional information (such as measurement information and location information) of the first device is exposed.

In a possible implementation, the terminal device measures the one or more second signals in the P second signals received on the N frequency resources $f_1$, $f_2$, ..., and $f_N$, to obtain the corresponding carrier phase measurement information. Optionally, the carrier phase measurement information of the one or more second signals in the P second signals is the measured carrier phase value or the estimated carrier phase value of the one or more second signals in the P second signals, for example, $\varphi(u, 1)$, $\varphi(u, i)$, ..., and $\varphi(u, j)$, where i and j are less than or equal to M, and $\varphi(u, i)$ is the measured carrier phase value or the estimated carrier phase value obtained by the terminal device by measuring the second signal (belonging to the P second signals) received on the $i^{th}$ frequency resource $f_i$.

In another possible implementation, the terminal device obtains, through measurement, the difference between the measured carrier phase values or the estimated carrier phase values of the one or more second signals, in the P second signals, received by the terminal device on the any two frequency resources in the N frequency resources $f_1$, $f_2$, ..., and $f_N$, for example, $\varphi(u, 3)-\varphi(u, 1)$, $\varphi(u, 5)-\varphi(u, 2)$, $\varphi(u, i)-\varphi(u, j)$, ..., where i and j are less than or equal to M.

With reference to the first aspect, in some implementations of the first aspect, the any two frequency resources in the N frequency resources are two sequentially adjacent frequency resources for sending the first signal.

Optionally, an example in which the first device is the terminal device. When N is greater than 1, the terminal device receives the difference between the measured carrier phase values or the estimated carrier phase values of the one or more second signals in the P second signals on sequentially adjacent frequency resources for sending the first signal in the N frequency resources $f_1$, $f_2$, ..., and $f_N$.

The difference between the measured carrier phase values of the P second signals and/or the difference between the estimated carrier phase values of the P second signals may be all information of carrier phase measurement information of two groups of second signals (adjacent in a sending sequence), for example, $\varphi(u, 2)-\varphi(u, 1)$, $\varphi(u, 3)-\varphi(u, 2)$, $\varphi(u, 4)-\varphi(u, 3)$, ..., $\varphi(u, M)-\varphi(u, M-1)$, or $\varphi(u, 1)-\varphi(u, 2)$, $\varphi(u, 2)-\varphi(u, 3)$, $\varphi(u, 3)-\varphi(u, 4)$, ..., $\varphi(u, M-1)-\varphi(u, M)$, or may be partial information of carrier phase measurement information of two groups of second signals (adjacent in a sending sequence), for example, $\varphi(u, 2)-\varphi(u, 1)$, $\varphi(u, 4)-\varphi(u, 3)$, $\varphi(u, 6)-\varphi(u, 5)$, ..., $\varphi(u, M)-\varphi(u, M-1)$, or $\varphi(u, 1)-\varphi(u, 2)$, $\varphi(u, 3)-\varphi(u, 4)$, $\varphi(u, 5)-\varphi(u, 6)$, ..., $\varphi(u, M-1)-\varphi(u, M)$, or may be other information. This is not limited in this application. In addition, this implementation is also applicable to this explanation in other content of this application document. For brevity, when this implementation appears again, details are not described again.

In this embodiment of this application, an example in which the first device is the terminal device is used. The terminal device receives a difference between measured carrier phase values or estimated carrier phase values of the two groups of second signals on frequency resources adjacent (instead of any two frequency resources) in the sending sequence in the N frequency resources $f_1$, $f_2$, ..., and $f_N$, so that times at which the terminal device obtains the carrier phase measurement information of the two groups of second signals are close. In this way, a phase measurement error caused by factors such as a frequency offset can be effectively reduced. This improves accuracy of positioning performance.

With reference to the first aspect, in some implementations of the first aspect, the first device simultaneously sends the M first signals on the N frequency resources.

With reference to the first aspect, in some implementations of the first aspect, M is equal to P.

In this embodiment of this application, the first device sends the M first signals on the N frequency resources, and the second device sends the P (P=M) second signals on the N frequency resources. In this way, the positioning module can use the carrier phase measurement information of all (rather than some) of the M first signals and the carrier phase measurement information of the P (P=M) second signals to a maximum extent. This can effectively improve positioning robustness.

With reference to the first aspect, in some implementations of the first aspect, M is less than P.

In this embodiment of this application, the first device sends the M first signals on the N frequency resources, and the second device may send the P (M<P) second signals on the N frequency resources. In this way, the positioning module can obtain additional carrier phase measurement information (carrier phase measurement information of (P-M) second signals) to assist in location calculation, for example, obtain pseudo-range information based on the additional carrier phase measurement information. This narrows down a range of location calculation and effectively improves positioning performance.

With reference to the first aspect, in some implementations of the first aspect, the first information further includes one or more of the following: a measurement time of the carrier phase measurement information of the one or more second signals, and a measurement error of the carrier phase measurement information of the one or more second signals.

Optionally, the first information may further include other information. This is not limited in this application.

In this embodiment of this application, the first information may include the measurement time of the carrier phase measurement information of the one or more second signals and/or the measurement error of the carrier phase measurement information of the one or more second signals. The measurement time can help determine which phase measurement information is latest and which phase measurement information is adjacent. The measurement error can provide error information of phase measurement, such as an average value, a variance, and a covariance. The positioning module may perform error estimation, calibration, and the like based on the measurement error. This improves accuracy and reliability of a positioning calculation result.

With reference to the first aspect, in some implementations of the first aspect, when N is greater than 1, at least two frequency resources in the N frequency resources are distributed on K carriers, where K is a positive integer greater than 1.

Optionally, at least two carriers in the K carriers are non-contiguous in frequency domain.

Optionally, the at least two carriers in the K carriers belong to different frequency bands or frequency segments.

Optionally, the frequency bands or the frequency segments are frequency ranges in which the K carriers are located. To properly use spectrum resources and ensure that various industries and services do not interfere with each other when using spectrum resources, the international telecommunication union radiocommunication sector (ITU-R) specifies a unified frequency range for radio frequency segments used by various services and communication systems.

For example, a frequency band or frequency segment used by China Mobile may include one or more of the following:

1. 900 MHz (Band 8), including uplink: 889 MHz to 904 MHz; and downlink: 934 MHz to 949 MHz;
2. 1800 MHz (Band 3), including uplink: 1710 MHz to 1735 MHz; and downlink: 1805 MHz to 1830 MHz;
3. 2 GHz (Band 34): 2010 MHz to 2025 MHz;
4. 1.9 GHz (Band 39): 1880 MHz to 1920 MHz;
5. 2.3 GHz (Band 40): 2320 MHz to 2370 MHz;
6. 2.6 GHz (Band 41, n41): 2515 MHz to 2675 MHz; and
7. 4.9 GHz (n79): 4800 MHz to 4900 MHz.

In addition, in this embodiment of this application, the various errors can be eliminated by sending the signals in the round-trip manner. In this way, a problem of phase misalignment between a plurality of signals transmitted on K non-contiguous frequency resources (for example, the K carriers) in frequency domain can be resolved. This is equivalent to splicing the reference signals on the K carriers into a "large-bandwidth" reference signal (a total bandwidth is close to a sum of bandwidths of the K carriers) for positioning. Compared with the conventional technology in which only positioning performance corresponding to a "single-carrier bandwidth" can be achieved, in this embodiment of this application, positioning performance corresponding to the "total bandwidth of the K carriers" can be achieved. Positioning performance can be effectively improved, and spectrum resource utilization can be improved.

According to a second aspect, a communication method is provided. The method includes: A first device sends M first signals on N frequency resources. The first device receives, on the N frequency resources, P second signals sent by a second device, where the P second signals are signals responding to the M first signals. The first device receives second information sent by the second device, where the second information includes one or more of carrier phase measurement information of the M first signals, the carrier phase measurement information of the M first signals is used for positioning or location calculation, N, M, and P are positive integers, M is greater than or equal to N, and P is greater than or equal to N.

It should be understood that, in this embodiment of this application, a value relationship between M and P is not limited. M may be greater than P, M may be less than P, or M may be equal to P. Optionally, for example, the first device sends the M first signals, and the second device sends the P second signals to the first device in response to the M first signals. It is assumed that M>P. If the first device sends three first signals, the second device returns only two second signals (for example, only two of the first signals are received due to link quality) in response to the three first signals. In this case, a positioning module uses only carrier phase measurement information of the two second signals and carrier phase measurement information of the two first signals responding to the second signals. In other words, when performing positioning, the positioning module performs positioning based on the carrier phase measurement information of the two second signals and the carrier phase measurement information of the two first signals responding to the second signals.

The foregoing "frequency resource" is a segment of contiguous spectrum resources in frequency domain, and may include one or more of a subcarrier, a resource block (resource block, RB), a bandwidth part (bandwidth part, BWP), a component carrier (component carrier, CC), a frequency band or frequency segment (band, for example, a frequency band/frequency segment n41 (2515 MHz to 2675 MHz)), a frequency layer (frequency layer), a frequency point (frequency point), and a frequency range (frequency range, FR).

Optionally, when the first device sends one first signal on each frequency resource, M is equal to N.

Optionally, when the N frequency resources belong to one frequency segment (in other words, when N=1), the first device may send a plurality of (M>1) reference signals on the frequency segment. Therefore, in this case, M is greater than N.

Optionally, when the N frequency resources are N subcarriers (in other words, when N>1), the first device may send a single (M=1) reference signal on the N subcarriers. Therefore, in this case, M is less than N.

The M first signals are used for positioning, and the M first signals include one or more of a positioning reference signal PRS, a sounding reference signal SRS, a positioning sounding reference signal pos-SRS, a tracking reference signal (tracking reference signal, TRS), a channel state information-reference signal (channel state information-reference signal, CSI-RS), a demodulation reference signal (demodulation reference signal, DMRS), a phase tracking reference signal (phase noise tracking reference signal, PTRS), and a sidelink reference signal.

The P second signals are used for positioning, and the P second signals include one or more of a positioning reference signal PRS, a sounding reference signal SRS, a positioning sounding reference signal pos-SRS, a tracking reference signal (tracking reference signal, TRS), a channel state information-reference signal (channel state information-reference signal, CSI-RS), a demodulation reference signal (demodulation reference signal, DMRS), a phase tracking reference signal (phase noise tracking reference signal, PTRS), and a sidelink reference signal.

Optionally, the M first signals and/or the P second signals may alternatively be other signals. This is not limited in this application.

The first device may be a terminal device.

When the first device performs positioning as a positioning module, the first device may calculate one or more of a phase difference, a distance, and a location, where the phase difference and the distance are intermediate variables for obtaining the location. The distance is a distance between the first device and the second device.

Optionally, "positioning" in this embodiment of this application may be calculation of one or more of geographical location information of the first device, information about a distance between the first device and the second device or another terminal/network device, angle information of the first device (for example, an angle of a connection line between the first device and the second device or the another terminal/network device), and posture information (for example, an orientation) of the first device, or may be calculation of another location-related parameter or information. This is not limited in this application. In addition, an explanation of "location calculation" or "positioning" appearing below is the same as this explanation, and is uniformly described herein. When "location calculation" or "positioning" appears again, details are not described again.

Optionally, the first device may alternatively be a base station.

The first device receives the second information sent by the second device. A carrier of the second information may be a radio resource control (radio resource control, RRC) message, a sidelink (sidelink) message, or another message. This is not limited in this application.

In this embodiment of this application, various errors including a synchronization error between a receiver and a transmitter, a phase difference between different carriers/channels, and a phase difference between a local oscillator signal of the receiver and a local oscillator signal of the transmitter can be eliminated by sending signals in a round-trip manner. In this way, a problem of phase inconsistency between reference signals received by the receiver can be effectively resolved, and high-precision positioning can be implemented.

In addition, in this embodiment of this application, when the terminal device is used as the positioning module, signaling between the first device and another network device unit can be reduced. This effectively reduces a positioning delay and positioning overheads. When a device other than the terminal device is used as the positioning module, calculation complexity of the terminal device can be reduced, and power consumption of the terminal device can be effectively reduced.

With reference to the second aspect, in some implementations of the second aspect, the first device performs positioning. After receiving the second information sent by the second device, the first device performs positioning based on one or more of the carrier phase measurement information of the M first signals that is carried in the second information and one or more of carrier phase measurement information of the P second signals that is obtained by the first device. The positioning may be that the first device performs location calculation on the first device to obtain location information of the first device.

With reference to the second aspect, in some implementations of the second aspect, the first device sends first information, where the first information includes the one or more of the carrier phase measurement information of the P second signals, and the carrier phase measurement information of the P second signals is used for positioning.

With reference to the second aspect, in some implementations of the second aspect, the first device sends third information.

The third information may include the entire second information or a part of the second information, may include entire information or a part of information obtained by processing the entire second information or a part of the second information by the first device, or may include information obtained by processing the second information in another manner. This is not limited in this application.

Optionally, the first device may combine the first information and the third information into new information, and then send the new information.

The first device may be the terminal device or the base station. For example, the first device may send, to a network device (for example, a location management network element (for example, an LMF)), the first information and the third information and/or the new information obtained by combining the first information and the third information.

Optionally, the first device may separately send the first information and the third information in different messages.

Optionally, a carrier of the first information or the third information may be an LPP message, an RRC message, or another message. This is not limited in this application.

In this embodiment of this application, after receiving the second information sent by the second device, the first device obtains the one or more of the carrier phase measurement information of the M first signals, and may send the one or more of the carrier phase measurement information of the M first signals together with the first information to the positioning module (for example, the location management network element). The positioning module performs positioning based on the received one or more of the carrier phase measurement information of the P second signals and the received one or more of the carrier phase measurement information of the M first signals. The various errors including the synchronization error between the receiver and the transmitter, the phase difference between different carriers/channels, and the phase difference between the local oscillator signal of the receiver and the local oscillator signal of the transmitter can be eliminated by sending the signals in the round-trip manner. In this way, the problem of phase inconsistency between the reference signals received by the receiver can be effectively resolved, and high-precision positioning can be implemented.

With reference to the second aspect, in some implementations of the second aspect, the carrier phase measurement information of the M first signals includes a measured carrier phase value or an estimated carrier phase value of one or more first signals in the M first signals received by the second device on the N frequency resources; and/or when N is greater than 1, the carrier phase measurement information of the M first signals includes a difference between measured carrier phase values or estimated carrier phase values of one or more first signals in the M first signals received by the second device on any two frequency resources in the N frequency resources.

The carrier phase measurement information of the P second signals includes a measured carrier phase value or an estimated carrier phase value of one or more second signals in the P second signals received by the first device on the N frequency resources; and/or when N is greater than 1, the carrier phase measurement information of the P second signals includes a difference between measured carrier phase values or estimated carrier phase values of one or more second signals, in the P second signals, received by the first device on the any two frequency resources in the N frequency resources.

Optionally, in this implementation, the first device may be one or more antennas in a plurality of antennas of the first device. Because spatial locations of different antennas are different, measured carrier phase values or estimated carrier phase values of the M first signals and/or measured carrier phase values or estimated carrier phase values of the P second signals that are obtained on the plurality of antennas may be different.

In this embodiment of this application, the carrier phase measurement information of the P second signals may include the measured carrier phase values of the P second signals, and the measured values may be directly obtained by the first device through measurement. Alternatively, the carrier phase measurement information of the P second signals may include the estimated carrier phase values of the P second signals. For example, the estimated value may be an integrated value obtained after a plurality of measured values are processed according to some algorithms, or an integrated value obtained after measured values of the plurality of antennas are comprehensively considered, so that more accurate information about the measured values can be provided. Alternatively, the carrier phase measurement information of the P second signals may include the measured carrier phase values and the estimated carrier phase values of the P second signals. In this way, the positioning module can obtain more measurement information. This further improves accuracy and robustness of positioning performance.

In addition, when N is greater than 1, the carrier phase measurement information of the P second signals may alternatively include a difference between the measured carrier phase values of the P second signals and/or a difference between the estimated carrier phase values of the P second signals. The difference between the measured carrier phase values of the P second signals and/or the difference between the estimated carrier phase values of the P second signals are/is parameters/a parameter directly required by the positioning module in a positioning process. In this way, signaling overheads can be effectively reduced, and no additional information (such as measurement information and the location information) of the first device is exposed.

With reference to the second aspect, in some implementations of the second aspect, the any two frequency resources in the N frequency resources are two sequentially adjacent frequency resources for sending the first signal.

In this embodiment of this application, an example in which the first device is the terminal device is used. The terminal device receives a difference between measured carrier phase values or estimated carrier phase values of two groups of second signals on frequency resources adjacent (instead of any two frequency resources) in a sending sequence in the N frequency resources $f_1$, $f_2$, ..., and $f_N$, so that times at which the terminal device obtains carrier phase measurement information of the two groups of second signals are close. In this way, a phase measurement error caused by factors such as a frequency offset can be effectively reduced. This improves accuracy of positioning performance.

With reference to the second aspect, in some implementations of the second aspect, the first device simultaneously sends the M first signals on the N frequency resources.

With reference to the second aspect, in some implementations of the second aspect, M is equal to P.

In this embodiment of this application, the first device sends the M first signals on the N frequency resources, and the second device sends the P (P=M) second signals on the N frequency resources. In this way, the positioning module can use the carrier phase measurement information of all (rather than some) of the M first signals and the carrier phase measurement information of the P (P=M) second signals to a maximum extent. This can effectively improve positioning robustness.

With reference to the second aspect, in some implementations of the second aspect, M is less than P.

In this embodiment of this application, the first device sends the M first signals on the N frequency resources, and the second device may send the P (M<P) second signals on the N frequency resources. In this way, the positioning module can obtain additional carrier phase measurement information (carrier phase measurement information of (P-M) second signals) to assist in location calculation, for example, obtain pseudo-range information based on the additional carrier phase measurement information. This narrows down a range of location calculation and effectively improves positioning performance.

With reference to the second aspect, in some implementations of the second aspect, the first information further includes one or more of the following: a measurement time of carrier phase measurement information of one or more second signals, and a measurement error of the carrier phase measurement information of the one or more second signals. The second information further includes one or more of the following: a measurement time of carrier phase measurement information of one or more first signals, and a measurement error of the carrier phase measurement information of the one or more first signals.

Optionally, the first information or the second information may further include other information. This is not limited in this application.

With reference to the second aspect, in some implementations of the second aspect, when N is greater than 1, at least two frequency resources in the N frequency resources are distributed on K carriers, where K is a positive integer greater than 1.

Optionally, at least two carriers in the K carriers are non-contiguous in frequency domain. Optionally, the at least two carriers in the K carriers belong to different frequency bands or frequency segments.

Optionally, explanations about the frequency band or the frequency segment have been described in detail in the first aspect. For brevity, details are not described herein again.

In this embodiment of this application, the second information may include the measurement time of the carrier phase measurement information of the one or more first signals and/or the measurement error of the carrier phase measurement information of the one or more first signals. The measurement time can help determine which phase measurement information is latest and which phase measurement information is adjacent. The measurement error can provide error information of phase measurement, such as an average value, a variance, and a covariance. The positioning module may perform error estimation, calibration, and the like based on the measurement error. This improves accuracy and reliability of a positioning calculation result.

In addition, in this embodiment of this application, the various errors can be eliminated by sending the signals in the round-trip manner. In this way, a problem of phase misalignment between a plurality of signals transmitted on K non-contiguous frequency resources (for example, the K carriers) in frequency domain can be resolved. This is equivalent to splicing the reference signals on the K carriers into a "large-bandwidth" reference signal (a total bandwidth is close to a sum of bandwidths of the K carriers) for positioning. Compared with the conventional technology in which only positioning performance corresponding to a "single-carrier bandwidth" can be achieved, in this embodiment of this application, positioning performance corresponding to the "total bandwidth of the K carriers" can be achieved. Positioning performance can be effectively improved, and spectrum resource utilization can be improved.

According to a third aspect, a communication method is provided. The method includes: A second device receives, on N frequency resources, M first signals sent by a first device. The second device sends P second signals to the first device on the N frequency resources in response to the M first signals. The second device receives first information sent by the first device, where the first information includes one or more of carrier phase measurement information of the P second signals, the carrier phase measurement information of the P second signals is used for positioning, N, M, and P are positive integers, M is greater than or equal to N, and P is greater than or equal to N.

It should be understood that, in this embodiment of this application, a value relationship between M and P is not limited. M may be greater than P, M may be less than P, or M may be equal to P. Optionally, for example, the first device sends the M first signals, and the second device sends the P second signals to the first device in response to the M first signals. It is assumed that M>P. If the first device sends three first signals, the second device returns only two second signals (for example, only two of the first signals are received due to link quality) in response to the three first signals. In this case, a positioning module uses only carrier phase measurement information of the two second signals and carrier phase measurement information of the two first signals responding to the second signals. In other words, when performing positioning, the positioning module performs positioning based on the carrier phase measurement information of the two second signals and the carrier phase measurement information of the two first signals responding to the second signals.

"Positioning" in this embodiment of this application may be calculation of one or more of geographical location information of the first device, information about a distance between the first device and the second device or another terminal/network device, angle information of the first device (for example, an angle of a connection line between the first device and the second device or the another terminal/network device), and posture information (for example, an orientation) of the first device, or may be calculation of another location-related parameter or information. This is not limited in this application. In addition, an explanation of "positioning" appearing below is the same as this explanation, and is uniformly described herein. When "positioning" appears again, details are not described again.

The foregoing "frequency resource" is a segment of contiguous spectrum resources in frequency domain, and may include one or more of a subcarrier, a resource block (resource block, RB), a bandwidth part (bandwidth part, BWP), a component carrier (component carrier, CC), a frequency band or frequency segment (band, for example, a frequency band/frequency segment n41 (2515 MHz to 2675 MHz)), a frequency layer (frequency layer), a frequency point (frequency point), and a frequency range (frequency range, FR).

Optionally, when the second device sends one second signal on each frequency resource, P is equal to N.

Optionally, when the N frequency resources belong to one frequency segment (in other words, when N=1), the second device may send a plurality of (P>1) reference signals on the frequency segment. Therefore, in this case, P is greater than N.

Optionally, when the N frequency resources are N subcarriers (in other words, when N>1), the second device may send a single (P=1) reference signal on the N subcarriers. Therefore, in this case, P is less than N.

The M first signals are used for positioning, and the M first signals include one or more of a positioning reference signal PRS, a sounding reference signal SRS, a positioning sounding reference signal pos-SRS, a tracking reference signal (tracking reference signal, TRS), a channel state information-reference signal (channel state information-reference signal, CSI-RS), a demodulation reference signal (demodulation reference signal, DMRS), a phase tracking reference signal (phase noise tracking reference signal, PTRS), and a sidelink reference signal.

The P second signals are used for positioning, and the P second signals include one or more of a positioning reference signal PRS, a sounding reference signal SRS, a positioning sounding reference signal pos-SRS, a tracking reference signal (tracking reference signal, TRS), a channel state information-reference signal (channel state information-reference signal, CSI-RS), a demodulation reference signal (demodulation reference signal, DMRS), a phase tracking reference signal (phase noise tracking reference signal, PTRS), and a sidelink reference signal.

Optionally, the M first signals and/or the P second signals may alternatively be other signals. This is not limited in this application.

Optionally, the second device may be a terminal device (for example, UE), or may be a base station (for example, a gNB or an ng-eNB).

For example, when the second device is the terminal device, the second device may be used as a positioning module, and the received first information is used by the second device to perform positioning.

Optionally, when the second device is the terminal device, and the second device receives the first information sent by the first device (for example, the UE or the base station), a message carrier of the first information may be a sidelink (sidelink) message, a radio resource control (radio resource control, RRC) message, or another message. This is not limited in this application.

In this embodiment of this application, various errors including a synchronization error between a receiver and a transmitter, a phase difference between different carriers/channels, and a phase difference between a local oscillator signal of the receiver and a local oscillator signal of the transmitter can be eliminated by sending signals in a round-trip manner. In this way, a problem of phase inconsistency between reference signals received by the receiver can be effectively resolved, and high-precision positioning can be implemented.

With reference to the third aspect, in some implementations of the third aspect, the carrier phase measurement information of the P second signals includes a measured carrier phase value or an estimated carrier phase value of one or more second signals in the P second signals received by the first device on the N frequency resources; and/or when N is greater than 1, the carrier phase measurement information of the P second signals includes a difference between measured carrier phase values or estimated carrier phase values of one or more second signals, in the P second signals, received by the first device on any two frequency resources in the N frequency resources.

Optionally, in this implementation, the second device may be one or more antennas in a plurality of antennas of the second device. Because spatial locations of different antennas are different, measured carrier phase values or estimated carrier phase values of the P second signals obtained on the plurality of antennas may be different.

In this embodiment of this application, the carrier phase measurement information of the P second signals may include the measured carrier phase values of the P second signals, and the measured values may be directly obtained by the first device through measurement. Alternatively, the carrier phase measurement information of the P second signals may include the estimated carrier phase values of the P second signals. For example, the estimated value may be an integrated value obtained after a plurality of measured values are processed according to some algorithms, or an integrated value obtained after measured values of the plurality of antennas are comprehensively considered, so that more accurate information about the measured values can be provided. Alternatively, the carrier phase measurement information of the P second signals may include the measured carrier phase values and the estimated carrier phase values of the P second signals. In this way, the positioning module can obtain more measurement information. This further improves accuracy and robustness of positioning performance.

In addition, when N is greater than 1, the carrier phase measurement information of the P second signals may alternatively include a difference between the measured carrier phase values of the P second signals and/or a difference between the estimated carrier phase values of the P second signals. The difference between the measured carrier phase values of the P second signals and/or the difference between the estimated carrier phase values of the P second signals are/is parameters/a parameter directly required by the positioning module in a positioning process. In this way, signaling overheads can be effectively reduced, and no additional information (such as measurement information and location information) of the first device is exposed.

With reference to the third aspect, in some implementations of the third aspect, the any two frequency resources in the N frequency resources are frequency resources adjacent in a sending sequence.

In this embodiment of this application, an example in which the first device is a terminal device is used. The terminal device receives a difference between measured carrier phase values or estimated carrier phase values of two groups of second signals on frequency resources adjacent (instead of any two frequency resources) in a sending sequence in the N frequency resources $f_1$, $f_2$, ..., and $f_N$, so that times at which the terminal device obtains carrier phase measurement information of the two groups of second signals are close. In this way, a phase measurement error caused by factors such as a frequency offset can be effectively reduced. This improves accuracy of positioning performance.

With reference to the third aspect, in some implementations of the third aspect, M is equal to P.

In this embodiment of this application, the first device sends the M first signals on the N frequency resources, and the second device sends the P (P=M) second signals on the N frequency resources. In this way, the positioning module can use carrier phase measurement information of all (rather than some) of the M first signals and the carrier phase measurement information of the P (P=M) second signals to a maximum extent. This can effectively improve positioning robustness.

With reference to the third aspect, in some implementations of the third aspect, M is less than P.

In this embodiment of this application, the first device sends the M first signals on the N frequency resources, and the second device may send the P (M<P) second signals on the N frequency resources. In this way, the positioning module can obtain additional carrier phase measurement information (carrier phase measurement information of (P-M) second signals) to assist in location calculation, for example, obtain pseudo-range information based on the additional carrier phase measurement information. This narrows down a range of location calculation and effectively improves positioning performance.

With reference to the third aspect, in some implementations of the third aspect, the first information further includes one or more of the following: a measurement time of carrier phase measurement information of the one or more second signals, and a measurement error of the carrier phase measurement information of the one or more second signals.

Optionally, the first information may further include other information. This is not limited in this application.

With reference to the third aspect, in some implementations of the third aspect, when N is greater than 1, at least two frequency resources in the N frequency resources are distributed on K carriers, where K is a positive integer greater than 1.

Optionally, at least two carriers in the K carriers are non-contiguous in frequency domain.

Optionally, the at least two carriers in the K carriers belong to different frequency bands or frequency segments.

Optionally, explanations about the frequency band or the frequency segment have been described in detail in the first aspect. For brevity, details are not described herein again.

In this embodiment of this application, the first information may include the measurement time of the carrier phase measurement information of the one or more second signals and/or the measurement error of the carrier phase measurement information of the one or more second signals. The measurement time can help determine which phase measurement information is latest and which phase measurement information is adjacent. The measurement error can provide error information of phase measurement, such as an average value, a variance, and a covariance. The positioning module may perform error estimation, calibration, and the like based on the measurement error. This improves accuracy and reliability of a positioning calculation result.

In addition, in this embodiment of this application, the various errors can be eliminated by sending the signals in the round-trip manner. In this way, a problem of phase misalignment between a plurality of signals transmitted on K non-contiguous frequency resources (for example, the K carriers) in frequency domain can be resolved. This is equivalent to splicing the reference signals on the K carriers into a "large-bandwidth" reference signal (a total bandwidth is close to a sum of bandwidths of the K carriers) for positioning. Compared with the conventional technology in which only positioning performance corresponding to a "single-carrier bandwidth" can be achieved, in this embodiment of this application, positioning performance corresponding to the "total bandwidth of the K carriers" can be achieved. Positioning performance can be effectively improved, and spectrum resource utilization can be improved.

According to a fourth aspect, a communication method is provided. The method includes: A second device receives, on N frequency resources, M first signals sent by a first device. The second device sends P second signals to the first device on the N frequency resources in response to the M first signals. The second device sends second information, where the second information includes one or more of carrier phase measurement information of the M first signals, the carrier phase measurement information of the M first signals is used for positioning, N, M, and P are positive integers, M is greater than or equal to N, and P is greater than or equal to N.

It should be understood that, in this embodiment of this application, a value relationship between M and P is not limited. M may be greater than P, M may be less than P, or M may be equal to P. Optionally, for example, the first device sends the M first signals, and the second device sends the P second signals to the first device in response to the M first signals. It is assumed that M>P. If the first device sends three first signals, the second device returns only two second signals (for example, only two of the first signals are received due to link quality) in response to the three first signals. In this case, a positioning module uses only carrier phase measurement information of the two second signals and carrier phase measurement information of the two first signals responding to the second signals. In other words, when performing positioning, the positioning module performs positioning based on the carrier phase measurement information of the two second signals and the carrier phase measurement information of the two first signals responding to the second signals.

Optionally, the foregoing "frequency resource" is a segment of contiguous spectrum resources in frequency domain, and may include one or more of a subcarrier, a resource block (resource block, RB), a bandwidth part (bandwidth part, BWP), a component carrier (component carrier, CC), a frequency band or frequency segment (band, for example, a frequency band/frequency segment n41 (2515 MHz to 2675 MHz)), a frequency layer (frequency layer), a frequency point (frequency point), and a frequency range (frequency range, FR).

Optionally, when the second device sends one second signal on each frequency resource, P is equal to N.

Optionally, when the N frequency resources belong to one frequency segment (in other words, when N=1), the second device may send a plurality of (P>1) reference signals on the frequency segment. Therefore, in this case, P is greater than N.

Optionally, when the N frequency resources are N subcarriers (in other words, when N>1), the second device may send a single (P=1) reference signal on the N subcarriers. Therefore, in this case, P is less than N.

The M first signals are used for positioning, and the M first signals include one or more of a positioning reference signal PRS, a sounding reference signal SRS, a positioning sounding reference signal pos-SRS, a tracking reference signal (tracking reference signal, TRS), a channel state information-reference signal (channel state information-reference signal, CSI-RS), a demodulation reference signal (demodulation reference signal, DMRS), a phase tracking reference signal (phase noise tracking reference signal, PTRS), and a sidelink reference signal.

The P second signals are used for positioning, and the P second signals include one or more of a positioning reference signal PRS, a sounding reference signal SRS, a positioning sounding reference signal pos-SRS, a tracking reference signal (tracking reference signal, TRS), a channel state information-reference signal (channel state information-reference signal, CSI-RS), a demodulation reference signal (demodulation reference signal, DMRS), a phase tracking reference signal (phase noise tracking reference signal, PTRS), and a sidelink reference signal.

Optionally, the M first signals and/or the P second signals may alternatively be other signals. This is not limited in this application.

The first device may be a terminal device (for example, UE), or may be a base station (for example, a gNB or an ng-eNB).

Optionally, the second device may be a terminal device (for example, UE), or may be a base station (for example, a gNB or an ng-eNB).

Optionally, when the second device is the terminal device, and the second device sends the second information to a network device (for example, an LMF), a message carrier of the second information may be an LTE positioning protocol (LTE positioning protocol, LPP) message. Optionally, when the second device is the terminal device, and the second device sends the second information to the first device (for example, the UE or the base station), a message carrier of the second information may be a sidelink (sidelink) message, a radio resource control (radio resource control, RRC) message, or another message. This is not limited in this application.

The second device may send the second information to the terminal device. In this case, the second information is used by the terminal device to perform positioning. The second device may alternatively send the second information to the network device. In this case, the second information is used by the network device to perform positioning.

In this embodiment of this application, various errors including a synchronization error between a receiver and a transmitter, a phase difference between different carriers/channels, and a phase difference between a local oscillator signal of the receiver and a local oscillator signal of the transmitter can be eliminated by sending signals in a round-trip manner. In this way, a problem of phase inconsistency between reference signals received by the receiver can be effectively resolved, and high-precision positioning can be implemented.

With reference to the fourth aspect, in some implementations of the fourth aspect, the method further includes: The second device receives first information sent by the first device, where the first information includes one or more of carrier phase measurement information of the P second signals, and the carrier phase measurement information of the P second signals is used for location calculation. The second device sends fourth information.

The fourth information may include the entire first information or a part of the first information, may include entire information or a part of information obtained by processing the entire first information or a part of the first information by the second device, or may include information obtained by processing the first information in another manner. This is not limited in this application.

Optionally, the second device may combine the second information and the fourth information into new information, and then send the new information. For example, the second device may send, to the network device (for example, a location management network element (for example, the LMF)), the second information and the fourth information and/or the new information obtained by combining the second information and the fourth information, for positioning by the network device.

Optionally, a message carrier of the first information may be a sidelink (sidelink) message, a radio resource control (radio resource control, RRC) message, or another message. This is not limited in this application.

Optionally, a message carrier of the fourth information may be an LTE positioning protocol (LTE positioning protocol, LPP) message, or another message. This is not limited in this application.

In this embodiment of this application, after receiving the first information sent by the first device, the second device obtains the one or more of the carrier phase measurement information of the P second signals, and may send the one or more of the carrier phase measurement information of the P second signals together with the second information to the positioning module (for example, the location management network element). The positioning module performs positioning based on the received one or more of the carrier phase measurement information of the P second signals and the received one or more of the carrier phase measurement information of the M first signals. The various errors including the synchronization error between the receiver and the transmitter, the phase difference between different carriers/channels, and the phase difference between the local oscillator signal of the receiver and the local oscillator signal of the transmitter can be eliminated by sending the signals in the round-trip manner. In this way, the problem of phase inconsistency between the reference signals received by the receiver can be effectively resolved, and high-precision positioning can be implemented.

With reference to the fourth aspect, in some implementations of the fourth aspect, the carrier phase measurement information of the M first signals includes a measured carrier phase value or an estimated carrier phase value of one or more first signals in the M first signals received by the second device on the N frequency resources; and/or when N is greater than 1, the carrier phase measurement information of the M first signals includes a difference between measured carrier phase values or estimated carrier phase values of one or more first signals in the M first signals received by the second device on any two frequency resources in the N frequency resources.

Optionally, in this implementation, the second device may be one or more antennas in a plurality of antennas of the second device. Because spatial locations of different antennas are different, measured carrier phase values or estimated carrier phase values of the P second signals obtained on the plurality of antennas may be different.

In this embodiment of this application, the carrier phase measurement information of the P second signals may include the measured carrier phase values of the P second signals, and the measured values may be directly obtained by the first device through measurement. Alternatively, the carrier phase measurement information of the P second signals may include the estimated carrier phase values of the P second signals. For example, the estimated value may be an integrated value obtained after a plurality of measured values are processed according to some algorithms, or an integrated value obtained after measured values of the plurality of antennas are comprehensively considered, so that more accurate information about the measured values can be provided. Alternatively, the carrier phase measurement information of the P second signals may include the measured carrier phase values and the estimated carrier phase values of the P second signals. In this way, the positioning module can obtain more measurement information. This further improves accuracy and robustness of positioning performance.

In addition, when N is greater than 1, the carrier phase measurement information of the P second signals may alternatively include a difference between the measured carrier phase values of the P second signals and/or a difference between the estimated carrier phase values of the P second signals. The difference between the measured carrier phase values of the P second signals and/or the difference between the estimated carrier phase values of the P second signals are/is parameters/a parameter directly required by the positioning module in a positioning process. In this way, signaling overheads can be effectively reduced, and no additional information (such as measurement information and location information) of the first device is exposed.

With reference to the fourth aspect, in some implementations of the fourth aspect, the any two frequency resources in the N frequency resources are frequency resources adjacent in a sending sequence.

In this embodiment of this application, an example in which the first device is the terminal device is used. When N is greater than 1, the terminal device receives a difference between measured carrier phase values or estimated carrier phase values of two groups of second signals on frequency resources adjacent (instead of any two frequency resources) in a sending sequence in the N frequency resources $f_1$, $f_2$, ..., and $f_N$, so that times at which the terminal device obtains carrier phase measurement information of the two groups of second signals are close. In this way, a phase measurement error caused by factors such as a frequency offset can be effectively reduced. This improves accuracy of positioning performance.

With reference to the fourth aspect, in some implementations of the fourth aspect, M is equal to P.

In this embodiment of this application, the first device sends the M first signals on the N frequency resources, and the second device sends the P (P=M) second signals on the N frequency resources. In this way, the positioning module can use carrier phase measurement information of all (rather than some) of the M first signals and the carrier phase measurement information of the P (P=M) second signals to a maximum extent. This can effectively improve positioning robustness.

With reference to the fourth aspect, in some implementations of the fourth aspect, M is less than P.

In this embodiment of this application, the first device sends the M first signals on the N frequency resources, and the second device may send the P (M<P) second signals on the N frequency resources. In this way, the positioning module can obtain additional carrier phase measurement information (carrier phase measurement information of (P-M) second signals) to assist in location calculation, for example, obtain pseudo-range information based on the additional carrier phase measurement information. This narrows down a range of location calculation and effectively improves positioning performance.

With reference to the fourth aspect, in some implementations of the fourth aspect, the first information further includes one or more of the following: a measurement time of carrier phase measurement information of one or more second signals, and a measurement error of the carrier phase measurement information of the one or more second signals.

Optionally, the first information may further include other information. This is not limited in this application.

With reference to the fourth aspect, in some implementations of the fourth aspect, the second information further includes one or more of the following: a measurement time of carrier phase measurement information of the one or more first signals, and a measurement error of the carrier phase measurement information of the one or more first signals.

Optionally, the second information may further include other information. This is not limited in this application.

With reference to the fourth aspect, in some implementations of the fourth aspect, when N is greater than 1, at least two frequency resources in the N frequency resources are distributed on K carriers, where K is a positive integer greater than 1.

Optionally, at least two carriers in the K carriers are non-contiguous in frequency domain.

Optionally, the at least two carriers in the K carriers belong to different frequency bands or frequency segments.

Optionally, explanations about the frequency band or the frequency segment have been described in detail in the first aspect. For brevity, details are not described herein again.

In this embodiment of this application, the first information may include the measurement time of the carrier phase measurement information of the one or more second signals and/or the measurement error of the carrier phase measurement information of the one or more second signals. The measurement time can help determine which phase measurement information is latest and which phase measurement information is adjacent. The measurement error can provide error information of phase measurement, such as an average value, a variance, and a covariance. The positioning module may perform error estimation, calibration, and the like based on the measurement error. This improves accuracy and reliability of a positioning calculation result.

In addition, in this embodiment of this application, the various errors can be eliminated by sending the signals in the round-trip manner. In this way, a problem of phase misalignment between a plurality of signals transmitted on K non-contiguous frequency resources (for example, the K carriers) in frequency domain can be resolved. This is equivalent to splicing the reference signals on the K carriers into a "large-bandwidth" reference signal (a total bandwidth is close to a sum of bandwidths of the K carriers) for positioning. Compared with the conventional technology in which only positioning performance corresponding to a "single-carrier bandwidth" can be achieved, in this embodiment of this application, positioning performance corresponding to the "total bandwidth of the K carriers" can be achieved. Positioning performance can be effectively improved, and spectrum resource utilization can be improved.

According to a fifth aspect, a communication method is provided. The method includes: A network device receives first information, where the first information includes one or more of carrier phase measurement information of P second signals, the carrier phase measurement information of the P second signals is used for positioning, and P is a positive integer. The network device receives second information, and/or the network device receives third information. The third information includes a part of the second information or the entire second information, or the third information includes a part of processed second information or entire processed second information. The second information includes one or more of carrier phase measurement information of M first signals, the carrier phase measurement information of the M first signals is used for positioning, and M is a positive integer. The network device performs positioning based on the first information and at least one of the second information and the third information.

The third information may include the entire second information or the part of the second information, may include entire information or a part of information obtained by processing the entire second information or the part of the second information, or may include information obtained by processing the second information in another manner. This is not limited in this application.

Optionally, the network device may receive the first information, the second information, and the third information, where the first information, the second information, and the third information are used for positioning.

Optionally, the network device may receive new information obtained by combining the first information and the third information, and then perform positioning based on the new information.

Optionally, the network device may separately send the first information and the third information in a same message or different messages.

Optionally, that the network device receives the first information may be replaced with that the network device receives fourth information, where the fourth information includes a part of the first information or the entire first information, or the fourth information includes a part of processed first information or entire processed first information.

Optionally, the fourth information may include the entire first information or the part of the first information, may include entire information or a part of information obtained by processing the entire first information or the part of the first information, or may include information obtained by processing the first information in another manner. This is not limited in this application.

Optionally, the network device may receive the first information, the second information, and the fourth information, where the first information, the second information, and the fourth information are used for positioning.

Optionally, the network device may receive new information obtained by combining the second information and the fourth information, and then perform positioning based on the new information.

Optionally, the network device may separately send the second information and the fourth information in a same message or different messages.

Optionally, "positioning" in this embodiment of this application may be calculation of one or more of geographical location information of a first device, information about a distance between the first device and a second device or another terminal/network device, angle information of the first device (for example, an angle of a connection line between the first device and the second device or the another terminal/network device), and posture information (for example, an orientation) of the first device, or may be calculation of another location-related parameter or information. This is not limited in this application. In addition, an explanation of "positioning" appearing below is the same as this explanation, and is uniformly described herein. When "positioning" appears again, details are not described again.

It should be understood that, in this embodiment of this application, a value relationship between M and P is not limited. M may be greater than P, M may be less than P, or M may be equal to P.

Optionally, for example, the first device sends the M first signals, and the second device sends the P second signals to the first device in response to the M first signals. It is assumed that M>P. If the first device sends three first signals, the second device returns only two second signals (for example, only two of the first signals are received due to link quality) in response to the three first signals. In this case, a positioning module uses only carrier phase measurement information of the two second signals and carrier phase measurement information of the two first signals responding to the second signals. In other words, when performing positioning, the positioning module performs positioning based on the carrier phase measurement information of the two second signals and the carrier phase measurement information of the two first signals responding to the second signals.

Optionally, when the first information or the second information comes from a terminal device such as UE, a message carrier of the first information or the second information may be an LTE positioning protocol (LTE positioning protocol, LPP) message, or another message. This is not limited in this application.

When the first information or the second information comes from the network device such as a base station, a message carrier of the first information or the second information may be an NRPPa message, or another message. This is not limited in this application.

The M first signals are used for positioning, and the M first signals include one or more of a positioning reference signal PRS, a sounding reference signal SRS, a positioning sounding reference signal pos-SRS, a tracking reference signal (tracking reference signal, TRS), a channel state information-reference signal (channel state information-reference signal, CSI-RS), a demodulation reference signal (demodulation reference signal, DMRS), a phase tracking reference signal (phase noise tracking reference signal, PTRS), and a sidelink reference signal.

The P second signals are used for positioning, and the P second signals include one or more of a positioning reference signal PRS, a sounding reference signal SRS, a positioning sounding reference signal pos-SRS, a tracking reference signal (tracking reference signal, TRS), a channel state information-reference signal (channel state information-reference signal, CSI-RS), a demodulation reference signal (demodulation reference signal, DMRS), a phase tracking reference signal (phase noise tracking reference signal, PTRS), and a sidelink reference signal.

Optionally, the M first signals and/or the P second signals may alternatively be other signals. This is not limited in this application.

The network device may be a location management network element (for example, an LMF network element).

In this embodiment of this application, various errors including a synchronization error between a receiver and a transmitter, a phase difference between different carriers/channels, and a phase difference between a local oscillator signal of the receiver and a local oscillator signal of the transmitter can be eliminated by sending signals in a round-trip manner. In this way, a problem of phase inconsistency between reference signals received by the receiver can be effectively resolved, and high-precision positioning can be implemented.

With reference to the fifth aspect, in some implementations of the fifth aspect, the carrier phase measurement information of the P second signals includes a measured carrier phase value or an estimated carrier phase value of one or more second signals in the P second signals received by the first device on N frequency resources; and/or the carrier phase measurement information of the P second signals includes a difference between measured carrier phase values or estimated carrier phase values of one or more second signals, in the P second signals, received by the first device on any two frequency resources in the N frequency resources.

The carrier phase measurement information of the M first signals includes a measured carrier phase value or an estimated carrier phase value of one or more first signals in the M first signals received by the second device on the N frequency resources; and/or when N is greater than 1, the carrier phase measurement information of the M first signals includes a difference between measured carrier phase values or estimated carrier phase values of one or more first signals in the M first signals received by the second device on the any two frequency resources in the N frequency resources.

Optionally, in this implementation, the first device may be one or more antennas in a plurality of antennas of the first device. Because spatial locations of different antennas are different, measured carrier phase values or estimated carrier phase values of the P second signals obtained on the plurality of antennas may be different.

Optionally, in this implementation, the network device may be one or more antennas in a plurality of antennas of the network device. Because spatial locations of different antennas are different, measured carrier phase values or estimated carrier phase values of the P second signals and/or measured carrier phase values or estimated carrier phase values of the M first signals that are obtained on the plurality of antennas may be different.

In this embodiment of this application, the carrier phase measurement information of the P second signals may include the measured carrier phase values of the P second signals, and the measured values may be directly obtained by the first device through measurement, or the carrier phase measurement information of the P second signals may include the estimated carrier phase values of the P second signals, for example, the estimated value may be an integrated value obtained after a plurality of measured values are processed according to some algorithms, or an integrated value obtained after measured values of the plurality of antennas are comprehensively considered, or the carrier phase measurement information of the P second signals may include the measured carrier phase values and the estimated carrier phase values of the P second signals; and/or the carrier phase measurement information of the M first signals may include the measured carrier phase values of the M first signals, and the measured values may be directly obtained by the second device through measurement, or the carrier phase measurement information of the M first signals may include the estimated carrier phase values of the M first signals, for example, the estimated value may be an integrated value obtained after a plurality of measured values are processed according to some algorithms, or an integrated value obtained after measured values of the plurality of antennas are comprehensively considered, or the carrier phase measurement information of the M first signals may include the measured carrier phase values and the estimated carrier phase values of the M first signals, so that more accurate information about the measured values can be provided.

In addition, in this embodiment of this application, when N is greater than 1, the carrier phase measurement information of the P second signals may include a difference between the measured carrier phase values of the P second signals and/or a difference between the estimated carrier phase values of the P second signals; and/or the carrier phase measurement information of the M first signals may include a difference between the measured carrier phase values of the M first signals and/or a difference between the estimated carrier phase values of the M first signals. The difference between the measured values and/or the difference between the estimated values are parameters directly required in a positioning process. In this way, signaling overheads can be effectively reduced, and no additional information (hardware designs/a hardware design of the first device and/or the second device may be obtained based on the information) of the first device and/or the second device is exposed.

With reference to the fifth aspect, in some implementations of the fifth aspect, the any two frequency resources in the N frequency resources are frequency resources adjacent in a sending sequence.

In this embodiment of this application, an example in which the first device is a terminal device is used. The terminal device receives a difference between measured carrier phase values or estimated carrier phase values of two groups of second signals on frequency resources adjacent (instead of any two frequency resources) in a sending sequence in the N frequency resources $f_1$, $f_2$, ..., and $f_N$, so that times at which the terminal device obtains carrier phase measurement information of the two groups of second signals are close. In this way, a phase measurement error caused by factors such as a frequency offset can be effectively reduced. This improves accuracy of positioning performance.

With reference to the fifth aspect, in some implementations of the fifth aspect, M is equal to P.

In this embodiment of this application, the first device sends the M first signals on the N frequency resources, and the second device sends the P (P=M) second signals on the N frequency resources. In this way, the positioning module can use the carrier phase measurement information of all (rather than some) of the M first signals and the carrier phase measurement information of the P (P=M) second signals to a maximum extent. This can effectively improve positioning robustness.

With reference to the fifth aspect, in some implementations of the fifth aspect, M is less than P.

In this embodiment of this application, the first device sends the M first signals on the N frequency resources, and the second device may send the P (M<P) second signals on the N frequency resources. In this way, the positioning module can obtain additional carrier phase measurement information (carrier phase measurement information of (P-M) second signals) to assist in location calculation, for example, obtain pseudo-range information based on the additional carrier phase measurement information. This narrows down a range of location calculation and effectively improves positioning performance.

With reference to the fifth aspect, in some implementations of the fifth aspect, the first information further includes one or more of the following: a measurement time of carrier phase measurement information of the one or more second signals, and a measurement error of the carrier phase measurement information of the one or more second signals.

Optionally, the first information may further include other information. This is not limited in this application.

With reference to the fifth aspect, in some implementations of the fifth aspect, the second information further includes one or more of the following: a measurement time of carrier phase measurement information of the one or more first signals, and a measurement error of the carrier phase measurement information of the one or more first signals.

Optionally, the second information may further include other information. This is not limited in this application.

With reference to the fifth aspect, in some implementations of the fifth aspect, when N is greater than 1, at least two frequency resources in the N frequency resources are distributed on K carriers, where K is a positive integer greater than 1.

Optionally, at least two carriers in the K carriers are non-contiguous in frequency domain.

Optionally, the at least two carriers in the K carriers belong to different frequency bands or frequency segments.

Optionally, explanations about the frequency band or the frequency segment have been described in detail in the first aspect. For brevity, details are not described herein again.

In this embodiment of this application, the first information may include the measurement time of the carrier phase measurement information of the one or more second signals and/or the measurement error of the carrier phase measurement information of the one or more second signals. The second information may include the measurement time of the carrier phase measurement information of the one or more first signals and/or the measurement error of the carrier phase measurement information of the one or more first signals. The measurement time can help determine which phase measurement information is latest and which phase measurement information is adjacent. The measurement error can provide error information of phase measurement, such as an average value, a variance, and a covariance. The positioning module may perform error estimation, calibration, and the like based on the measurement error. This improves accuracy and reliability of a positioning calculation result.

In addition, in this embodiment of this application, various errors can be eliminated by sending signals in a round-trip manner. In this way, a problem of phase misalignment between a plurality of signals transmitted on K non-contiguous frequency resources (for example, the K carriers) in frequency domain can be resolved. This is equivalent to splicing the reference signals on the K carriers into a "large-bandwidth" reference signal (a total bandwidth is close to a sum of bandwidths of the K carriers) for positioning. Compared with the conventional technology in which only positioning performance corresponding to a "single-carrier bandwidth" can be achieved, in this embodiment of this application, positioning performance corresponding to the "total bandwidth of the K carriers" can be achieved. Positioning performance can be effectively improved, and spectrum resource utilization can be improved.

According to a sixth aspect, a communication apparatus is provided. The apparatus includes modules configured to perform the method in any one of the first aspect or the possible implementations of the first aspect, or includes modules configured to perform the method in any one of the second aspect or the possible implementations of the second aspect, or includes modules configured to perform the method in any one of the third aspect or the possible implementations of the third aspect, or includes modules configured to perform the method in any one of the fourth aspect or the possible implementations of the fourth aspect, or includes modules configured to perform the method in any one of the fifth aspect or the possible implementations of the fifth aspect.

According to a seventh aspect, a communication apparatus is provided, and includes a processor. The processor is coupled to a memory, and may be configured to execute instructions in the memory, to implement the method in any one of the possible implementations of the first aspect or the second aspect. Optionally, the apparatus further includes the memory. Optionally, the apparatus further includes a communication interface, and the processor is coupled to the communication interface.

In an implementation, the apparatus is a first device (for example, a terminal device). When the apparatus is the first device, the communication interface may be a transceiver or an input/output interface.

In another implementation, the apparatus is a chip disposed in a first device. When the apparatus is the chip disposed in the first device, the communication interface may be an input/output interface.

Optionally, the transceiver may be a transceiver circuit. Optionally, the input/output interface may be an input/output circuit.

According to an eighth aspect, a communication apparatus is provided, and includes a processor. The processor is coupled to a memory, and may be configured to execute instructions in the memory, to implement the method in any one of the possible implementations of the third aspect or the fourth aspect. Optionally, the apparatus further includes the memory. Optionally, the apparatus further includes a communication interface, and the processor is coupled to the communication interface.

In an implementation, the apparatus is a second device (for example, a terminal device or a base station). When the apparatus is the second device, the communication interface may be a transceiver or an input/output interface.

In another implementation, the apparatus is a chip disposed in a second device. When the apparatus is the chip disposed in the second device, the communication interface may be an input/output interface.

Optionally, the transceiver may be a transceiver circuit. Optionally, the input/output interface may be an input/output circuit.

According to a ninth aspect, a network device is provided, including a processor. The processor is coupled to a memory, and may be configured to execute instructions in the memory, to implement the method in any one of the possible implementations of the fifth aspect. Optionally, the apparatus further includes the memory. Optionally, the apparatus further includes a communication interface, and the processor is coupled to the communication interface.

In an implementation, the apparatus is an LMF. When the apparatus is the LMF, the communication interface may be a transceiver or an input/output interface.

In another implementation, the apparatus is a chip disposed in an LMF. When the apparatus is the chip disposed in the LMF, the communication interface may be an input/output interface.

Optionally, the transceiver may be a transceiver circuit. Optionally, the input/output interface may be an input/output circuit.

According to a tenth aspect, a processor is provided. The processor includes an input circuit, an output circuit, and a processing circuit. The processing circuit is configured to receive a signal through the input circuit, and transmit a signal through the output circuit, so that the processor performs the method in any one of the possible implementations of any one of the first aspect to the fifth aspect.

In a specific implementation process, the processor may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to an eleventh aspect, an apparatus is provided. The apparatus includes a processor and a memory. The processor is configured to read instructions stored in the memory, receive a signal through a receiver, and transmit a signal through a transmitter, to perform the method in any one of the possible implementations of any one of the first aspect to the fifth aspect.

Optionally, there are one or more processors, and there are one or more memories.

Optionally, the memory may be integrated with the processor, or the memory and the processor are separately disposed.

In a specific implementation process, the memory may be a non-transitory (non-transitory) memory, for example, a read-only memory (read-only memory, ROM). The memory and the processor may be integrated into one chip, or may be respectively disposed in different chips. A type of the memory and a manner in which the memory and the processor are disposed are not limited in embodiments of this application.

It should be understood that, a related data exchange process such as sending of indication information may be a process of outputting the indication information from the processor, and receiving of capability information may be a process of receiving the input capability information by the processor. Specifically, data output by the processor may be output to a transmitter, and input data received by the processor may be from a receiver. The transmitter and the receiver may be collectively referred to as a transceiver.

The apparatus in the eleventh aspect may be a chip. The processor may be implemented by using hardware or software. When the processor is implemented by using hardware, the processor may be a logic circuit, an integrated circuit, or the like. When the processor is implemented by using software, the processor may be a general-purpose processor, and is implemented by reading software code stored in the memory. The memory may be integrated into the processor, or may exist independently of the processor.

According to a twelfth aspect, a computer-readable storage medium is provided. The computer-readable storage medium stores a computer program or instructions. When the computer program or the instructions are executed, the method in any one of the possible implementations of any one of the first aspect to the fifth aspect is implemented.

According to a thirteenth aspect, a computer program product including instructions is provided. When the instructions are run, the method in any one of the possible implementations of any one of the first aspect to the fifth aspect is implemented.

According to a fourteenth aspect, a communication chip is provided, storing instructions. When the instructions are run on a computer device, the communication chip is enabled to perform the method in any one of the possible implementations of the first aspect to the fifth aspect.

According to a fifteenth aspect, a communication system is provided. The communication system includes an AMF, an NG-RAN, and an LMF. Optionally, the communication system may further include an SLP. Optionally, the communication system may further include an E-SMLC.

Optionally, the communication system further includes another device that communicates with the foregoing network element.

**BRIEF DESCRIPTION OF DRAWINGS**

FIG. 1 is a diagram of a network architecture according to this application;
FIG. 2(a) to FIG. 2(c) are interaction diagrams of a communication method 200 according to this application;
FIG. 3 is a schematic flowchart of a positioning method 300 according to this application;
FIG. 4 is an interaction diagram of a communication method 400 according to this application;

FIG. 5 is an interaction diagram of a communication method 500 according to this application;
FIG. 6 is a block diagram of a communication apparatus according to an embodiment of this application; and
FIG. 7 is a diagram of a structure of a communication apparatus according to an embodiment of this application.

## DESCRIPTION OF EMBODIMENTS

The following describes in detail embodiments of this application with reference to accompanying drawings.

Technical solutions in embodiments of this application may be applied to various communication systems such as a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, or a 5th generation (5th generation, 5G) system or new radio (new radio, NR) system.

To address challenges of wireless broadband technologies and maintain the leading edge of a 3GPP network, the 3GPP standard group formulated a next-generation mobile communication network architecture (next-generation system), referred to as a 5G network architecture. This architecture not only supports access to a 5G core network (5G core network, 5GC) by using a wireless technology (for example, LTE) defined by the 3GPP standard group, but also supports access to the 5GC by using a non-3GPP access technology and a non-3GPP interworking function (non-3GPP interworking function, N3IWF), a trusted non-3GPP gateway function (trusted non-3GPP gateway function, TNGF), a trusted WLAN interworking function (trusted WLAN interworking function, TWIF) or a next-generation access gateway (next-generation packet data gateway, NG-PDG). Core network functions are classified into a user plane network element function (User plane function, UPF) and a control plane network element function (Control plane function, CPF). The UPF is mainly responsible for forwarding a data packet, controlling quality of service (quality of service, QoS), collecting charging information, and the like. The CP is mainly responsible for user registration authentication, mobility management, delivering a data packet forwarding policy to the UPF, a QoS control policy, and the like, and may be further divided into an access and mobility management function (access and mobility management function, AMF) and a session management function (session management function, SMF).

A first device or a second device in embodiments of this application may be user equipment (user equipment, UE), a terminal, an access terminal, a terminal in V2X communication, a subscriber unit, a subscriber station, a mobile station, a remote station, a remote terminal, a mobile device, a user terminal, a wireless communication device, a user agent or user apparatus, or a base station. The first device or the second device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network, or a terminal device in a future evolved public land mobile network (public land mobile network, PLMN). This is not limited in embodiments of this application. The terminal may alternatively include a V2X device, for example, a vehicle or an on-board unit (on-board unit, OBU) in a vehicle. In addition, the first device or the second device may alternatively be a network device. For an explanation of the network device, refer to the following detailed descriptions.

The network device in embodiments of this application is an access device through which a terminal device accesses a mobile communication system in a wireless manner, and includes an access network (access network, AN) device, for example, a base station. The network device may alternatively be a device that communicates with the terminal device over an air interface. The network device may include an evolved NodeB (evolutional Node B) in a long term evolution (long term evolution, LTE) system or a long term evolution-advanced (long term evolution-advanced, LTE-A) system, where the evolved NodeB may be referred to as an eNB or an e-NodeB for short. The eNB is an apparatus, deployed in a radio access network, that meets a fourth generation (fourth generation, 4G) mobile communication technology standard and that provides a wireless communication function for the terminal device. Alternatively, the network device may be a new radio controller (new radio controller, NR controller), may be a base station (gNode B, gNB) in a 5G system, may be a central unit (centralized unit), may be a new radio base station, may be a remote radio head, may be a micro base station (also referred to as a small cell), may be a relay (relay), may be a distributed unit (distributed unit), may be a macro base station in various forms, or may be a transmission reception point (transmission reception point, TRP), a reception point (reception point, RP), a transmission measurement function (transmission measurement function, TMF), a transmission point (transmission point, TP), or any other radio access device. Embodiments of this application are not limited thereto. The network device may alternatively include a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a wireless fidelity (wireless fidelity, Wi-Fi) access point (access point, AP), or the like. A specific technology and a specific device form used by the network device are not limited in embodiments of this application. The network device may correspond to the eNB in a 4G system, and correspond to the gNB in the 5G system.

The base station in embodiments of this application may include a central unit (centralized unit, CU) and a distributed unit (distributed unit, DU). A plurality of DUs may be centrally controlled by one CU. The CU and the DU may be divided based on protocol layer functions of a wireless network. For example, functions of a PDCP layer and a protocol layer above the PDCP layer are set on the CU, and functions of protocol layers below the PDCP layer, such as an RLC layer and a MAC layer, are set on the DU. It should be noted that division into the protocol layers is merely an example, and there may be another division into the protocol layers. A radio frequency apparatus may be remotely deployed and not placed in the DU, or may be integrated into the DU, or may be partially remotely disposed and partially integrated into the DU. This is not limited in embodiments of this application. In addition, in some embodiments, a control plane (control plan, CP) and a user plane (user plan, UP) of the CU may be separated into different entities for implementation, where the entities are respectively a control-plane CU entity (CU-CP entity) and a user-plane CU entity (CU-UP entity). In this network architecture, signaling generated by the CU may be sent to the terminal device through the DU, or signaling generated by UE may be sent to the CU through the DU. The DU may directly transparently transmit the signaling to the UE or the CU through protocol layer encapsulation without parsing the signaling. In this network architecture, the CU is classified as a network device on a radio access network (radio access network, RAN) side. In addition, the CU may alternatively be classified as a network device on a core network (core network, CN) side. This is not limited in this application.

The terminal device in embodiments of this application is connected to a radio access network (radio access network, RAN) device in a wireless manner. A radio access network element is connected to a core network device in a wireless or wired manner. The core network device and the radio access network element may be different independent physical devices, a function of the core network device and a logical function of the radio access network element may be integrated into one physical device, or some functions of the core network device and some functions of the radio access network element may be integrated into one physical device. The terminal may be located at a fixed location, or may be mobile.

The network device may be a core network device, for example, may be a location management function (location management function, LMF) network element, a mobility management entity (mobility management entity, MME), or a broadcast/multicast service center (broadcast/multicast service center, BMSC), or may include a corresponding function entity in the 5G system, for example, a core network control plane (control plane, CP) or a user plane (user plan, UP) network function, for example, an SMF or an access and mobility management function AMF. The core network control plane may also be understood as a core network control plane function (control plane function, CPF) entity.

Positioning precision depends to a large extent on a bandwidth for sending a reference signal for positioning. However, in an actual application scenario, because a spectrum bandwidth is limited or a capability bandwidth of a transmitter is limited, it is difficult to obtain a segment of "contiguous large bandwidth" for sending the reference signal for positioning. Consequently, a high-precision positioning requirement cannot be met.

To improve positioning precision, an available bandwidth for positioning needs to be increased. In an existing solution, enhanced mobile broadband (enhanced mobile broadband, eMBB) UE may send a large-bandwidth reference signal in a carrier aggregation (carrier aggregation, CA) manner. Another existing solution is a frequency hopping solution based on a positioning sounding reference signal (sounding reference signal, SRS). To be specific, at different sending moments, UE may send SRSs on different frequency resources. A main principle is as follows: A plurality of "narrowband" positioning signals are sent in a frequency hopping manner at N moments, and a receiver receives the plurality of "narrowband" signals and obtains a "wideband" positioning signal through some algorithms or processing.

However, in the foregoing first existing solution, because radio frequency channels for sending positioning signals on different carriers are different, a problem of phase misalignment may exist between the SRSs sent by the UE on the different carriers. Consequently, positioning precision is reduced to a great extent. In the foregoing second existing solution, after each frequency hopping, because a phase-locked loop is re-locked, a phase jump occurs in time domain. Consequently, phases of the signals received by the receiver at the different moments are inconsistent, and the large-bandwidth signal cannot be effectively restored, affecting accuracy of positioning estimation.

Therefore, the existing positioning solution has a problem that the high-precision positioning requirement cannot be met.

In view of this, embodiments of this application provide a communication method and a communication apparatus. Various errors including a synchronization error between a receiver and a transmitter, a phase difference between different carriers/channels, and a phase difference between a local oscillator (local oscillator, LO) signal of the receiver and a local oscillator signal of the transmitter can be eliminated by sending signals in a round-trip manner. In this way, a problem of phase inconsistency between reference signals received by the receiver can be effectively resolved. A high-precision positioning solution is provided.

The solutions in embodiments of this application are applied to a location positioning scenario of a to-be-positioned device, and may be further applied to a fusion sensing positioning scenario. In other words, "positioning" in embodiments of this application may be replaced with "sensing".

To better understand the technical solutions provided in this application, the following first describes terms in embodiments of this application in detail.

1. Uu-based positioning

A positioning reference signal is sent between UEs over a Uu interface, and information such as positioning assistance data and a positioning measurement result is transmitted over the Uu interface. Uu is a cellular communication interface, where U represents a user to network interface (user to network interface), and u represents universal (universal).

2. Sidelink positioning

Sidelink positioning is a technology in which a sidelink positioning reference signal (sidelink positioning reference signal, S-PRS) is sent on a sidelink and terminal positioning measurement is performed.

Specifically, the positioning reference signal is sent between UEs through a PC5 (ProSe Communication 5) interface, but information such as positioning assistance data and a positioning measurement result may be transmitted through the PC5 interface or a Uu interface. The PC interface is a directly connected communication interface.

3. UE-based (UE-based) positioning method

UE is responsible for positioning (when assistance data is available) and may further provide a measurement result.

4. LMF-based (LMF-based) positioning method

The LMF-based positioning method is also referred to as UE-assisted positioning. In this method, UE provides only measurement and does not perform positioning. An LMF is responsible for location calculation (when assistance data is available).

It should be noted that each of Uu-based positioning and sidelink positioning may be classified into UE-based positioning and LMF-based positioning based on whether a positioning module is UE or an LMF. UE-based positioning in the sidelink positioning scenario is also referred to as sidelink-based positioning, and LMF-based positioning is also referred to as sidelink-assisted positioning.

5. Downlink positioning reference signal (downlink positioning reference signal, DL-PRS): used for a downlink positioning method and an uplink and downlink joint positioning method.

6. Uplink sounding reference signal (uplink sounding reference signal, UL-SRS): In a broad sense, an SRS includes an uplink reference signal used for multiple-input multiple-output (multi-input multi-output, MIMO) (namely, the MIMO-SRS in the 3GPP Rel-15 and the earlier releases), and an uplink positioning reference signal dedicated to positioning (namely, a pos-SRS proposed in the 3GPP Rel-16).

It should be noted that both the MIMO-SRS and the pos-SRS may be used for an uplink positioning method and the uplink and downlink joint positioning method. When used for positioning, the UL-SRS may also be used as an uplink positioning reference signal.

7. Positioning reference signal (positioning reference signal, PRS): The positioning reference signal includes a downlink positioning reference signal DL-PRS and an uplink positioning reference signal UL-SRS.

8. A sidelink positioning reference signal (sidelink positioning reference signal, S-PRS) is a positioning reference signal transmitted on a sidelink and dedicated to a sidelink scenario.

9. A transmission point (transmission point, TP) is also referred to as a transmission node or a sending node, and represents a group of transmit antennas (for example, an antenna array (with one or more antenna elements)) geographically located at a same location. This concept applies to a cell, a part of a cell, or a TP supporting only a DL-PRS. The transmission node may include an antenna of a base station (ng-eNB or gNB), a remote radio head (remote radio heads, RRH), a remote antenna of the base station, an antenna of a TP supporting only a DL-PRS, and the like. One cell may include one or more transmission points.

10. A reception point (reception point, RP) is also referred to as a receiving node, and represents a group of receive antennas (for example, an antenna array (with one or more antenna elements)) geographically located at a same location. This concept applies to a cell, a part of a cell, or an RP supporting only an UL-SRS. The transmission node may include an antenna of a base station (an ng-eNB or a gNB), a remote radio head, a remote antenna of the base station, an antenna of an RP supporting only an UL-SRS, and the like. One cell may include one or more reception points.

11. A transmission reception point (transmission-reception point, TRP) represents a set of antennas (for example, an antenna array (with one or more antenna elements)) geographically located at a same location and supporting a TP function and/or an RP function.

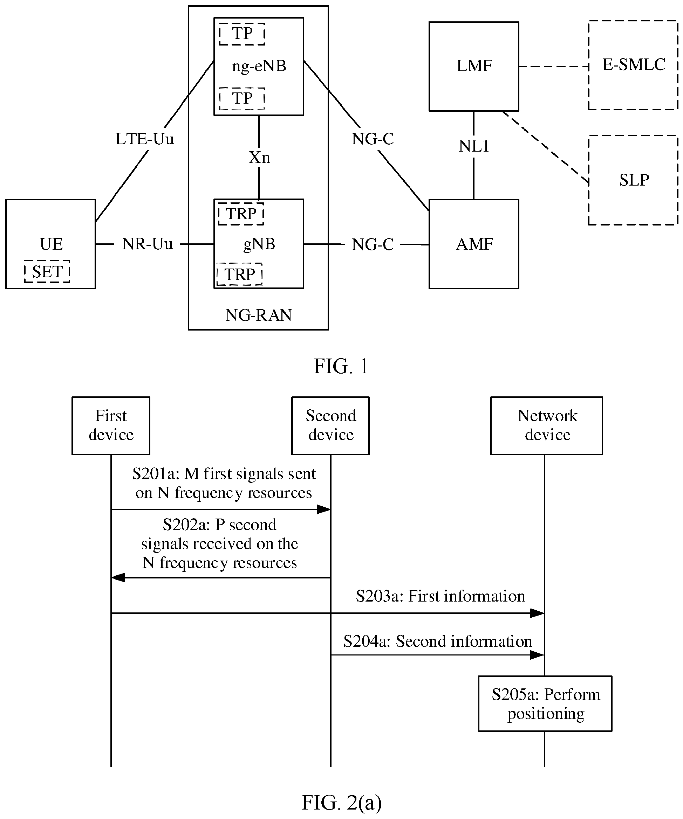

For example, FIG. 1 is a diagram of a network architecture according to an embodiment of this application. As shown in FIG. 1, the network architecture may include a terminal device, an access management network element, a location management network element, a (radio) access network device, and some network elements that are not shown, such as a session management network element and a network repository network element.

It should be understood that the network architecture in embodiments of this application may be a 5th generation system (5th generation system, 5GS), and a network element in the 5GS may also be referred to as a 5G core network element.

The following describes a function of each network element or device in the network architecture.

1. The terminal device may also be referred to as user equipment (user equipment, UE), a mobile station (mobile station, MS), a mobile terminal (mobile terminal, MT), or the like, and is a device that provides voice and/or data connectivity for a user. For example, the terminal device may include a handheld device with a wireless connection function, or a vehicle-mounted device. Currently, the terminal device may be a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. In FIG. 1, the terminal device is shown by using the UE. This is merely used as an example, and does not constitute a limitation on the terminal device.

2. The access management network element is mainly used for mobility management, access management, and the like. In a 5G communication system, the access management network element may be an access and mobility management function (access and mobility management function, AMF). For example, as shown in FIG. 1, the AMF mainly performs functions such as mobility management and access authentication/authorization. In addition, the AMF is further responsible for transferring a user policy between a terminal and a policy control function (policy control function, PCF) network element. The AMF may receive non-access stratum (non-access stratum, NAS) signaling (including mobility management (mobility management, MM) signaling and session management (session management, SM) signaling) of the terminal device and related signaling (for example, N2 (next-generation (next-generation, NG) network 2 interface) signaling exchanged with the AMF) of an access network device, to complete a user registration procedure, SM signaling forwarding, and mobility management. Specifically, the AMF network element may receive, from a 5G core network (5G core network, 5GC) location service (location service, LCS) entity, a location service request related to target UE, or the AMF may start some location services on behalf of specific target UE, and forward the location service request to the location management network element. After location information returned by the UE is obtained, the related location information is returned to the 5GC LCS entity. In future communication, for example, 6G, the access management network element may still be an AMF network element or have another name. This is not limited in this application.

3. The location management network element is mainly responsible for positioning management, for example, receiving a positioning request from another network element (for example, the AMF), collecting positioning data of the user, and obtaining a user location through positioning calculation. The location management network element may further manage and configure a base station or a positioning management unit, to implement positioning reference signal configuration, and the like. The location management network element may be a location management function (location management function, LMF) network element, a local location management function (local LMF) network element, or another network element having a similar function. In the positioning architecture based on the 5G core network, the LMF network element may be responsible for supporting different types of location services related to the target UE, including positioning the UE and transferring assistance data to the UE. A control plane and a user plane of the LMF network element are an E-SMLC and an SLP, respectively. The LMF network element may exchange the following information with an ng-eNB/gNB and the UE:

exchanging information with the ng-eNB/gNB by using an NRPPa message, for example, obtaining a PRS, SRS configuration information, cell timing, and cell location information; and
transferring UE capability information, assistance information, and measurement information with the UE by using an LPP message.

4. The (radio) access network ((radio) access network, (R)AN) device: An access network device may also be referred to as an access device. The (R)AN can manage a radio resource, provide an access service for user equipment, and complete forwarding of user equipment data between the user equipment and a core network. The (R)AN may also be understood as a base station in a network.

For example, the access network device in embodiments of this application may be any communication device with a wireless transceiver function for communicating with user equipment. The access network device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (a home evolved NodeB, HeNB, or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission reception point, TRP), or the like. Alternatively, the access network device may be a gNB or a transmission point (TRP or TP) in the 5G system such as an NR system, or one antenna panel or a group of antenna panels (including a plurality of antenna panels) of a base station in the 5G system, or may be a network node, for example, a baseband unit (BBU) or a distributed unit (distributed unit, DU), that constitutes a gNB or a transmission point. In the positioning architecture based on the 5G core network, the gNB/ng-eNB may provide measurement information for the target UE, and transfer the information to the LMF.

In some deployments, a gNB may include a central unit (centralized unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is generated by the CU, and is finally encapsulated by the PHY layer of the DU into PHY layer information, or is converted from PHY layer information. Therefore, in this architecture, higher layer signaling (for example, RRC layer signaling) may also be considered to be sent by the DU, or sent by the DU and the AAU. It may be understood that the access network device may be a device including one or more of a CU node, a DU node, or an AAU node. In addition, the CU may be divided into an access network device in a radio access network (radio access network, RAN), or the CU may be divided into an access network device in a core network (core network, CN). The access network device may be a next-generation radio access network (next-generation radio access network, NG-RAN). This is not limited in this application.

5. The session management network element is mainly configured to: manage a session, allocate and manage an internet protocol (internet protocol, IP) address of user equipment, select an endpoint that can manage a user plane function interface and a policy control and charging function interface, perform downlink data notification, and the like. For example, the session management network element may be a session management function (session management function, SMF) network element, responsible for a session management function, and completing procedures such as establishment, release, and update related to a PDU session.

6. The network repository network element provides functions of storing and selecting network function entity information for another core network element. In the 5G communication system, the network element may be a network repository function (network function repository function, NRF) network element, and mainly includes the following functions: a service discovery function, and maintaining NF texts of available network function (network function, NF) instances and services supported by the NF instances.

The function network element may be a network element in a hardware device, a software function running on dedicated hardware, or a virtualization function instantiated on a platform (for example, a cloud platform). One or more services may be obtained through division based on the foregoing function network element. Further, a service independent of a network function may exist. In this application, an instance of the function network element, an instance of the service included in the function network element, and an instance of the service that is independent of the network function may all be referred to as service instances.

It should be understood that unified description is provided herein. If the foregoing network elements appear in the following architecture, the foregoing description of the functions included in the network elements is also applicable. For brevity, details are not described again when the network elements appear next time.

A person skilled in the art can learn from FIG. 1 that the user equipment UE may be connected to the AMF network element through an NG-RAN, the AMF network element is connected to the LMF network element, and the LMF network element is separately connected to the E-SMLC network element and the SLP network element. Interfaces and connections in the architecture may include LTE-Uu, NR-Uu, NG-C, and NL1. NG-C is a control plane connection between the NG-RAN and the AMF network element, LTE-Uu is a protocol interface between the ng-eNB and the UE, NR-Uu is a protocol interface between the UE and the gNB, and NL1 is a protocol interface between the LMF network element and the AMF network element.

Certainly, the system architecture in FIG. 1 may further include another network element, for example, a device or a network element such as an SMF network element, a network slice selection function (network slice selection function, NSSF), a unified data repository (unified data repository, UDR), or a network repository function (network repository function, NRF). This is not specifically limited.

It should be understood that an interface or a service-based interface between the network elements shown in FIG. 1 is merely an example. In a 5G network and another future network, the interface or the service-based interface between the network elements may alternatively not be the interface shown in the figure. This is not limited in this application.

It should be understood that a name of each network element shown in FIG. 1 is merely a name, and the name constitutes no limitation on a function of the network element. In the 5G network and the another future network, the foregoing network elements may alternatively have other names. This is not specifically limited in embodiments of this application. For example, in a 6G network, some or all of the foregoing network elements may still use terms in 5G, or may have other names. A general description is provided herein. Details are not described again below.

It should be further understood that embodiments of this application are not limited to the architecture of the system shown in FIG. 1. For example, a communication system to which this application is applicable may include more or fewer network elements or devices. The devices or the network elements in FIG. 1 may be hardware, or may be software obtained through functional division or a combination of hardware and software. The devices or the network elements in FIG. 1 may communicate with each other through another device or network element.

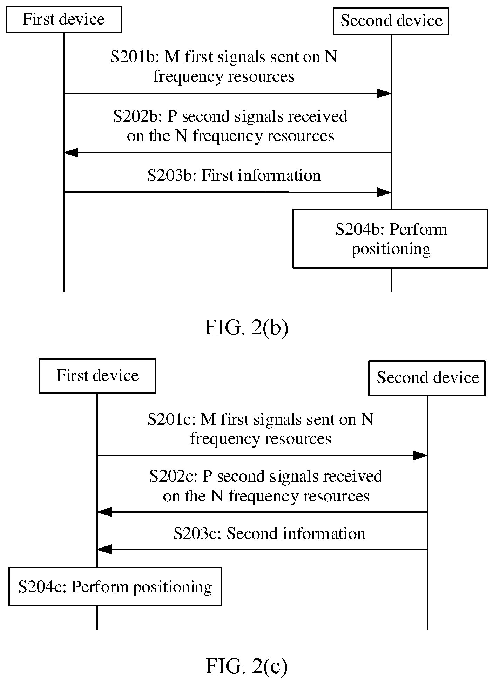

FIG. 2(a), FIG. 2(b), and FIG. 2(c) are respectively interaction diagrams of communication methods 200a, 200b, and 200c according to embodiments of this application.

As shown in FIG. 2(a), in this embodiment, a first device and a second device provide information for positioning, and a network device performs positioning. The method 200a includes the following steps.

Step S201a: The first device sends M first signals on N frequency resources, where N and M are positive integers, and M is greater than or equal to N.

The first device may be a terminal device (for example, UE), or the first device may be a base station.

Optionally, the first device may alternatively be one or more antennas in a plurality of antennas of the first device.

The M first signals are used for positioning, and the M first signals may be one or more of a positioning reference signal PRS, a sounding reference signal SRS (for example, an UL-SRS), a positioning sounding reference signal pos-SRS, a tracking reference signal (tracking reference signal, TRS), a channel state information-reference signal (channel state information-reference signal, CSI-RS), a demodulation reference signal (demodulation reference signal, DMRS), a phase tracking reference signal (phase noise tracking reference signal, PTRS), and a sidelink reference signal. In addition, the M first signals may alternatively be other signals. This is not limited in this application.

The foregoing "frequency resource" is a segment of contiguous spectrum resources in frequency domain, and may include one or more of a subcarrier, a resource block (resource block, RB), a bandwidth part (bandwidth part, BWP), a component carrier (component carrier, CC), a frequency band or frequency segment (band, for example, a frequency band/frequency segment n41 (2515 MHz to 2675 MHz)), a frequency layer (frequency layer), a frequency point (frequency point), and a frequency range (frequency range, FR).

Optionally, at least two frequency resources in the N frequency resources are distributed on K carriers, where K is a positive integer greater than 1. Optionally, at least two carriers in the K carriers are non-contiguous (in other words, not adjacent) in frequency domain, and/or the at least two carriers in the K carriers belong to different frequency bands or frequency segments.

Explanations about positioning, location calculation, and the frequency band or the frequency segment have been described in detail in the first aspect. For brevity, details are not described herein again.

It should be noted that a value relationship between M and N is not fixed. Optionally, when the first device sends one first signal on each frequency resource, M is equal to N.

Optionally, when the N frequency resources belong to one frequency segment (in other words, when N=1), the first device may send a plurality of (M>1) reference signals on the frequency segment. Therefore, in this case, M is greater than N.

Optionally, when the N frequency resources are N subcarriers (in other words, when N>1), the first device may send a single (M=1) reference signal on the N subcarriers. Therefore, in this case, M is less than N.

Step S202a: The first device receives, on the N frequency resources, P second signals sent by the second device, where N and P are positive integers, and P is greater than or equal to N.

The second device may be a terminal device (for example, UE), or may be a base station (for example, a gNB or an ng-eNB). For example, when the first device is the terminal device, the second device may be the base station; or when the first device is the base station, the second device may be the terminal device.

Optionally, the P second signals are signals responding to the received M first signals, in other words, the second device sends the second signals after receiving the first signals.

The P second signals are used for positioning, and the P second signals may be one or more of a positioning reference signal PRS, a sounding reference signal SRS (for example, a DL-SRS), a positioning sounding reference signal pos-SRS, a tracking reference signal (tracking reference signal, TRS), a channel state information-reference signal (channel state information-reference signal, CSI-RS), a demodulation reference signal (demodulation reference signal, DMRS), a phase tracking reference signal (phase noise tracking reference signal, PTRS), and a sidelink reference signal. In addition, the P second signals may alternatively be other signals. This is not limited in this application.

It should be understood that, in this embodiment of this application, a value relationship between M and P is not limited. M may be greater than P, M may be less than P, or M may be equal to P.

It should be understood that in step S201a, the M first signals may be simultaneously sent. For example, the first device may simultaneously send the M first signals in a CA manner, or may not simultaneously send the M first signals. For example, the first device separately sends the M first signals on different frequency resources in a frequency hopping manner. Alternatively, the first device may send the M first signals in a combination of a CA manner and a frequency modulation manner. In addition, the M first signals may also be simultaneously received or not simultaneously received. A corresponding explanation is similar to an explanation of sending the M first signals, and details are not described herein again.

Similarly, in step S201b, the P second signals may be simultaneously sent. For example, the second device may simultaneously send the P second signals in the CA manner, or may not simultaneously send the P second signals. For example, the second device separately sends the P second signals on the different frequency resources in the frequency hopping manner. Alternatively, the second device may send the P second signals in the combination of the CA manner and the frequency modulation manner. In addition, the P second signals may also be simultaneously received or not simultaneously received. A corresponding explanation is similar to an explanation of sending the P second signals, and details are not described herein again.

It should be understood that the foregoing explanations of the manners of receiving or sending the M first signals and the P second signals are applicable to this specification, and are uniformly described herein.

The first device sends the first signals, and then the first device receives the second signals sent by the second device (in other words, after receiving the first signals, the second device sends the second signals to the first device). A sending process of the signals may be interpreted as "round-trip sending".

Step S203a: The first device sends first information.

In an implementation, that the first device sends the first information to the network device may be that the first device (for example, the terminal device) may directly send the first information to the network device (for example, a location management network element (for example, an LMF network element)) by using an LTE positioning protocol (LTE positioning protocol, LPP) message, or the first device may send the first information to the network device by using another message. This is not limited in this application.

In another implementation, the first device (for example, the terminal device) sends the first information to the second device (for example, the base station or the terminal device) by using a radio resource control (radio resource control, RRC) message or a sidelink (sidelink) message. Then, the second device sends fourth information to the network device by using an LPP message or an NRPPa message.

The fourth information may include the entire first information or a part of the first information, may include entire information or a part of information obtained by processing the entire first information or a part of the first information by the second device, or may include information obtained by processing the first information in another manner. This is not limited in this application.

The first information includes one or more of carrier phase measurement information of the P second signals, the carrier phase measurement information of the P second signals is used for positioning, and P is a positive integer.

Optionally, the first information may further include one or more of the following: a measurement time of carrier phase measurement information of one or more second signals, and a measurement error of the carrier phase measurement information of the one or more second signals. In addition, the first information may further include other information. This is not limited in this application.

The carrier phase measurement information of the P second signals may include a measured carrier phase value or an estimated carrier phase value of the one or more second signals in the P second signals received by the first device on the N frequency resources, or may include a difference between measured carrier phase values or estimated carrier phase values of one or more second signals, in the P second signals, received by the first device on any two frequency resources in the N frequency resources. Optionally, the any two frequency resources in the N frequency resources may be two sequentially adjacent frequency resources for sending the first signal or the second signal.

Optionally, the first device may obtain the carrier phase measurement information of the P second signals based on the received P second signals.

Step S204a: The second device sends second information.

In an implementation, that the second device sends the second information to the network device may be that the second device (for example, the terminal device) sends the second information to the network device (for example, the location management network element (for example, the LMF network element)) by using an LTE positioning protocol (LTE positioning protocol, LPP) message or another message. This is not limited in this application.

In another implementation, that the second device sends the second information to the first device may alternatively be that the second device (for example, the terminal device) sends the second information to the first device (for example, the base station or the terminal device) by using a radio resource control (radio resource control, RRC) message, a sidelink (sidelink) message, or another message. Then, the first device sends third information to the network device.

The third information may include the entire second information or a part of the second information, may include entire information or a part of information obtained by processing the entire second information or a part of the second information by the first device, or may include information obtained by processing the second information in another manner. This is not limited in this application.

Optionally, the first device may separately send the first information and the third information.

Optionally, the first device may combine the first information and the third information into new information, and then send the new information. For example, the first device may send, to the network device (for example, the location management network element (for example, the LMF)), the first information and the third information and/or the new information obtained by combining the first information and the third information.

In another possible implementation of step S203a, the second device may separately send the second information and the fourth information.

In still another possible implementation of step S203a, the second device may combine the second information and the fourth information into new information, and then send the new information. For example, the second device may send, to the network device (for example, the location management network element (for example, the LMF)), the second information and the fourth information and/or the new information obtained by combining the second information and the fourth information.

The second information includes one or more of carrier phase measurement information of the M first signals, the carrier phase measurement information of the M first signals is used for positioning, N, M, and P are positive integers, M is greater than or equal to N, and P is greater than or equal to N.

Optionally, the second information may further include one or more of the following: a measurement time of carrier phase measurement information of one or more first signals, and a measurement error of the carrier phase measurement information of the one or more first signals. In addition, the second information may further include other information. This is not limited in this application.

The carrier phase measurement information of the M first signals may be a measured carrier phase value or an estimated carrier phase value of the one or more first signals in the M first signals received by the second device on the N frequency resources. When N is greater than 1, the carrier phase measurement information of the M first signals may be a difference between measured carrier phase values or estimated carrier phase values of one or more first signals in the M first signals received by the second device on the any two frequency resources in the N frequency resources. The any two frequency resources in the N frequency resources may be the two sequentially adjacent frequency resources for sending the first signal or the second signal.

Optionally, the second device may obtain the carrier phase measurement information of the M first signals based on the received M first signals.

Optionally, the network device may be one or more antennas in a plurality of antennas of the network device. Because spatial locations of different antennas are different, measured carrier phase values or estimated carrier phase values of the M first signals and/or measured carrier phase values or estimated carrier phase values of the P second signals that are obtained on the plurality of antennas may be different.

Step S205a: The network device performs positioning.

The network device performs positioning based on the received first information and the received second information.

Optionally, the network device may perform positioning based on the received first information and the received third information, may perform positioning based on the received new information obtained by combining the first information and the third information, or may perform positioning based on the received first information, the received second information, and the received third information.

Optionally, the network device may perform positioning based on the received second information and the received fourth information, may perform positioning based on the received new information obtained by combining the second information and the fourth information, or may perform positioning based on the received first information, the received second information, and the received fourth information.

Optionally, the network device may perform positioning based on the received third information and the received fourth information.

It should be understood that, optionally, "positioning" in this embodiment of this application may be calculation of one or more of geographical location information of the first device, information about a distance between the first device and the second device or another terminal/network device, angle information of the first device (for example, an angle of a connection line between the first device and the second device or the another terminal/network device), and posture information (for example, an orientation) of the first device, or may be calculation of another location-related parameter or information. This is not limited in this application. In addition, an explanation of "positioning" appearing below is the same as this explanation, and is uniformly described herein. When "positioning" appears again, details are not described again.

It should be noted that the "step" in this embodiment is merely an example, is a representation method used to better understand the embodiment, and does not constitute a substantive limitation on execution of the solutions in this application. For example, the "step" may also be understood as a "feature". In addition, this step does not constitute any limitation on an execution sequence of the solutions in this application. Any new technical solution formed based on this operation that does not affect implementation of the overall solution, such as a step sequence change, step combination, or step splitting, also falls within the scope disclosed in this application. For example, in this embodiment, an execution sequence between step S201a and step S202a and an execution sequence between step S203a and step S204a are not limited. When the two steps are performed in a reverse sequence, specific implementation of the solution is not affected. In addition, all "steps" in this application are applicable to the agreement. A unified description is provided herein. When the "steps" appear again, details are not described again.

In this embodiment of this application, various errors including a synchronization error between a receiver and a transmitter, a phase difference between different carriers/channels, and a phase difference between a local oscillator signal of the receiver and a local oscillator signal of the transmitter can be eliminated by sending signals in a round-trip manner. In this way, a problem of phase inconsistency between reference signals received by the receiver can be effectively resolved, and high-precision positioning can be implemented. In addition, the network device is used as a positioning module to perform positioning, so that calculation complexity of the first device (for example, the terminal device) or the second device (for example, the terminal device) can be reduced, and power consumption of the terminal device can be effectively reduced.

The embodiment shown in FIG. 2(b) has a parallel relationship with the embodiment shown in FIG. 2(a). A difference between the two embodiments lies in that in this embodiment, a second device is used as a positioning module to perform positioning. As shown in FIG. 2(b), the method 200b includes the following steps.

Step S201b and step S202b are the same as step S201a and step S202a. For brevity, details are not described herein again.

Step S203b: The first device sends first information to the second device.

The first device may be a terminal (for example, UE), or may be a base station (for example, a gNB or an ng-eNB), and the second device may be a terminal (for example, UE).

In an implementation, that the first device sends first information to the second device may be that the first device sends the first information to the second device (for example, a base station or the terminal device) by using a sidelink (sidelink) message or a radio resource control (radio resource control, RRC) message, or the first device may send the first information to the second device by using another message. This is not limited in this application.

Explanations of the first information and carrier phase measurement information of the P second signals have been provided in detail in FIG. 2(a). For brevity, details are not described herein again.

Step S204b: The second device performs positioning.

Optionally, before step S204b, the second device may obtain carrier phase measurement information of the M first signals based on the received M first signals, and generate second information. Explanations of the second information and the carrier phase measurement information of the M first signals have been provided in detail in FIG. 2(a). For brevity, details are not described herein again.

Optionally, the second device performs positioning based on the received first information and the generated second information.

In this embodiment of this application, various errors including a synchronization error between a receiver and a transmitter, a phase difference between different carriers/channels, and a phase difference between a local oscillator signal of the receiver and a local oscillator signal of the transmitter can be eliminated by sending signals in a round-trip manner. In this way, a problem of phase inconsistency between reference signals received by the receiver can be effectively resolved, and high-precision positioning can be implemented. In addition, the second device (for example, the terminal device) is used as the positioning module, so that signaling between the second device and another network device unit can be reduced. This effectively reduces a positioning delay and positioning overheads.

The embodiment shown in FIG. 2(c) has parallel relationships with the embodiment shown in FIG. 2(a) and the embodiment shown in FIG. 2(b). In this embodiment, a first device is used as a positioning module to perform positioning. As shown in FIG. 2(c), the method 200c includes the following steps.

Step S201c and step S202c are the same as step S201a and step S202a. For brevity, details are not described herein again.

Step S203c: The second device sends second information to the first device.

The first device may be a terminal (for example, UE), and the second device may be a terminal (for example, UE), or may be a base station (for example, a gNB or an ng-eNB).

In an implementation, that the second device sends second information to the first device may be that the second device sends the first information by using a sidelink (sidelink) message or a radio resource control (radio resource control, RRC) message, or the first device may send the first information to the first device (for example, a base station or the terminal device) by using another message. This is not limited in this application. The second information includes one or more of carrier phase measurement information of the M first signals, the carrier phase measurement information of the M first signals is used for positioning, N, M, and P are positive integers, M is greater than or equal to N, and P is greater than or equal to N.

It should be understood that explanations of the second information and the carrier phase measurement information of the M first signals have been provided in detail in the embodiment shown in FIG. 2(a). For brevity, details are not described herein again.

Optionally, the second device may obtain the carrier phase measurement information of the M first signals based on the received M first signals.

Step S204c: The first device performs positioning.

Optionally, before step S204c, the first device may obtain carrier phase measurement information of the P second signals based on the received P second signals, and generate first information. Explanations of the first information and the carrier phase measurement information of the P second signals have been provided in detail in FIG. 2(a). For brevity, details are not described herein again.

Optionally, the first device performs positioning based on the generated first information and the received second information and/or other positioning assistance information.

In this embodiment of this application, various errors including a synchronization error between a receiver and a transmitter, a phase difference between different carriers/channels, and a phase difference between a local oscillator signal of the receiver and a local oscillator signal of the transmitter can be eliminated by sending signals in a round-trip manner. In this way, a problem of phase inconsistency between reference signals received by the receiver can be effectively resolved, and high-precision positioning can be implemented. In addition, the first device (for example, the terminal device) is used as the positioning module, so that signaling between the first device and another network device unit can be reduced. This effectively reduces a positioning delay and positioning overheads.

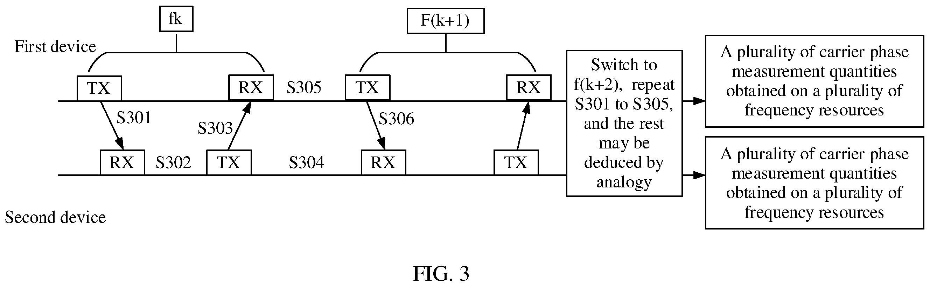

For example, to understand a positioning principle in this application more clearly, the following uses a frequency hopping manner as an example to describe in detail a positioning process in this application with reference to FIG. 3.

As shown in FIG. 3, a possible implementation of the positioning process in this application is as follows:

Step S301: A first device sends a first signal 1 at a frequency $f_k$.

Step S302: After receiving the first signal 1, a second device obtains a measured carrier phase value $\varphi_{12}(f_k, r)$ by measuring the first signal 1.

Optionally, the measured carrier phase value $\varphi_{12}(f_k, r)$ obtained by the second device by measuring the first signal 1 is shown in the following formula:

$$\varphi_{12}(f_k, r) = -2\pi f_k(\frac{r}{c_0} - \Delta_t) - \theta_{12} \ (\mathrm{mod} \ 2\pi) \ (1),$$

where
$r$ is a distance between the first device and the second device, $c_0$ is a speed of light, $\Delta_t$ is a local clock offset between the first device and the second device, and $\theta_{12}$ is a phase difference between LO signals of the two nodes in a case in which the first device is used as a transmitter and the second device is used as a receiver.

Step S303: The second device sends a second signal 2 at the frequency $f_k$.

The second device sends the second signal 2 to the first device at the frequency $f_k$.

Step S304: After receiving the second signal 2, the first device obtains a measured carrier phase value $\varphi_{21}(f_k, r)$ by measuring the second signal 2.

The measured carrier phase value $\varphi_{21}(f_k, r)$ obtained by the first device by measuring the second signal 2 is shown in the following formula:

$$\varphi_{21}(f_k, r) = -2\pi f_k \left(\frac{r}{c_0} + \Delta_t\right) - \theta_{21}(\mathrm{mod}\,2\pi) \quad (2),$$

where
$\theta_{21}$ is a phase difference between LO signals of the two nodes when the second device is used as a transmitter and the first device is used as a receiver. In a possible implementation, $0_{12} = -0_{21}$.

Step S305: The first device switches to a frequency resource $f_{(k+1)}$ to send a first signal 3.

Step S306: After receiving the first signal 3, the second device obtains a measured carrier phase value $\varphi_{12}(f_{k+1}, r)$ by measuring the first signal 3.

Similarly, the second device sends a second signal 4 at $f_{(k+1)}$, and the first device obtains a measured carrier phase value $\varphi_{21}(f_{k+1}, r)$ by measuring the second signal 4.

Steps S301 to S304 are repeated. The first device and the second device send a plurality of reference signals back and forth on a plurality of frequency resources in a CA manner and/or a frequency hopping manner, and each of the first device and the second device obtains a plurality of measured carrier phase values on the plurality of frequency resources.

Step S307: In a possible implementation, the first device sends one or more of a plurality of measured carrier phase values obtained on the plurality of frequency resources to a positioning module.

Step S308: In a possible implementation, the second device sends one or more of a plurality of measured carrier phase values obtained on the plurality of frequency resources to the positioning module.

Optionally, the positioning module may be a location management network element, the location management network element may be an LMF network element, or the positioning module may be a terminal device, for example, UE.

Step S309: The positioning module performs positioning after obtaining a plurality of measured carrier phase values from the first device and the second device on the plurality of frequency resources.

For example, the following provides a possible positioning implementation method:

(a) For a same frequency resource, round-trip measured carrier phase values are obtained. For example, the measured carrier phase values $\varphi_{12}(f_k, r)$ and $\varphi_{21}(f_k, r)$ obtained by the first device and the second device on the frequency $f_k$ are added, in other words, the formula (1) and the formula (2) are added, to obtain the following formula:

$$\varphi_{2W}(f_k, r) = \varphi_{12}(f_k, r) + \varphi_{21}(f_k, r) = -4\pi f_k \frac{r}{c_0}(\mathrm{mod}\,2\pi) \quad (3)$$

In this way, both the clock offset between the first device and the second device and the phase difference between the local LO signals can be eliminated, and only one unknown variable (the distance r) is included in the formula (3). However, because a value of a phase measurement quantity obtained through actual measurement is between 0 and $2\pi$, a problem of $2\pi$ ambiguity (integer ambiguity) exists. Therefore, the distance r cannot be directly obtained.

(b) For any two adjacent frequency resources, a round-trip carrier phase variation is obtained. For example, to resolve the foregoing problem of integer ambiguity, round-trip carrier phase measurement quantities obtained on the two adjacent frequency resources $f_k$ and $f_{(k+1)}$ are subtracted to obtain the following formula:

$$\Delta\varphi_k = \varphi_{2W}(f_{k+1}, r) - \varphi_{2W}(f_k, r) = -\frac{4\pi r}{c_0}\Delta f_k(\mathrm{mod}\,2\pi) \quad (4)$$

After transformation, an expression of a distance-phase relationship is obtained:

$$r(f_{k+1}, f_k) = -\frac{c_0}{4\pi r \Delta f_k}\Delta\varphi_k\left(\mathrm{mod}\,\frac{c_0}{2\Delta f_k}\right) \quad (5)$$

Through comparison of the formula (4) and the formula (5), calculated ambiguity changes to $\frac{c_0}{2\Delta f_k}$. For example, when $\Delta f_k = 1$ MHz, the calculated ambiguity is 150 m. That is, if r meets the formula (5), r+150*k meets the formula (5), where k=1, 2, 3, .... In this way, an improper value can be easily excluded.

(c) Finally, a final location result may be obtained by comprehensively considering calculation results of a plurality of groups of frequency points, to improve precision and robustness (for example, by using a method of least squares).

In this embodiment of this application, various errors including a synchronization error between a receiver and a transmitter, a phase difference between different carriers/channels, and a phase difference between a local oscillator signal of the receiver and a local oscillator signal of the transmitter can be eliminated by sending signals in a round-trip manner. In this way, a problem of phase inconsistency between reference signals received by the receiver can be effectively resolved, and high-precision positioning can be implemented. In addition, in the method, the terminal device does not need to support CA, and integer ambiguity does not need to be resolved. This can reduce costs and design complexity of the terminal device.

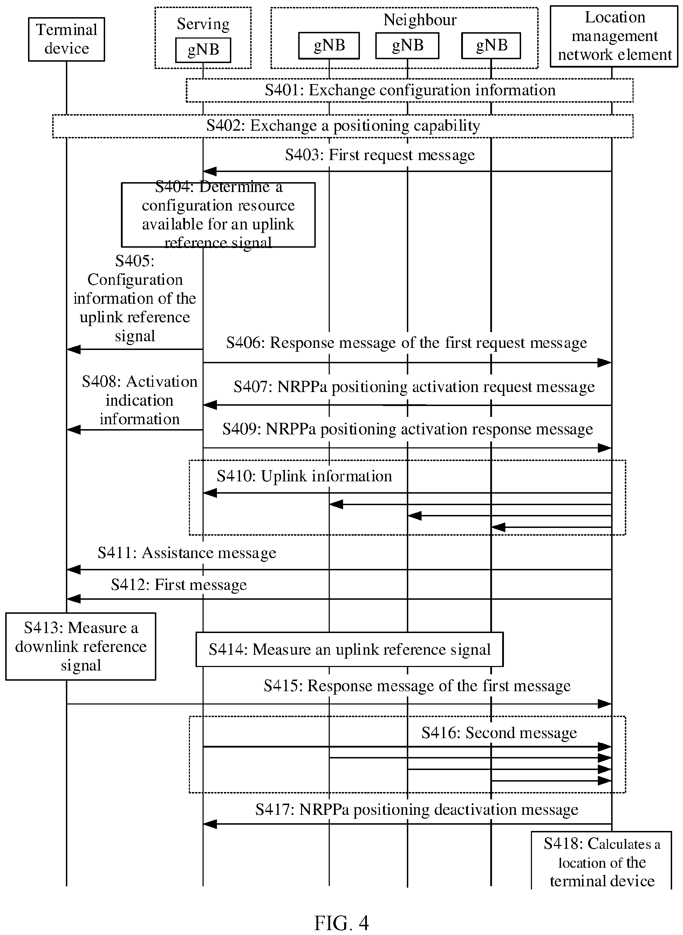

For example, based on the embodiment shown in FIG. 2(a) to FIG. 2(c), FIG. 4 is an interaction diagram of a communication method 400 according to this application. In this embodiment of this application, an example in which a first device is a terminal device, a second device is a gNB, and a network device is a location management network element (for example, an LMF) is used for description. As shown in FIG. 4, the method 400 includes the following steps.

Step S401: The location management network element exchanges configuration information with all gNBs participating in positioning.

The location management network element may exchange the configuration information with all the gNBs participating in positioning by using NR positioning protocol (NR positioning protocol annex, NRPPa) messages. Exchanging the configuration information may be exchanging DL-PRS configuration-related information, or may be exchanging other configuration information. This is not limited in this application.

The gNB participating in positioning may be replaced with a next-generation eNodeB (Next-generation eNodeB, ng-eNB), or may be replaced with another base station. This is not limited in this application.

Optionally, the gNB participating in positioning may be replaced with one or more of a TP, an RP, and a TRP.

Step S402: The location management network element exchanges a positioning capability of the terminal device with the terminal device.

Optionally, the location management network element may be the LMF network element, and the LMF network element may exchange the positioning capability of the terminal device with the terminal device by using an LPP capability transfer (LPP capability transfer) procedure. An LPP means an LTE positioning protocol (LTE positioning protocol), namely, a signaling protocol between the LMF and the UE. For example, the LMF requests the positioning capability from the UE by using an LPP message. For another example, the UE replies with the positioning capability by using an LPP message.

Optionally, the positioning capability includes a carrier phase positioning capability. For example, the carrier phase positioning capability may include one or more of a carrier phase measurement capability, a multi-carrier phase measurement capability, and a round-trip multi-carrier phase positioning capability. In addition, the carrier phase positioning capability may further include another capability. This is not limited in this application.

Step S403: The location management network element sends a first request message to a serving gNB, where the first request message is used to request to obtain uplink information of the terminal device.

It should be understood that when the first device is the terminal device and the second device is a base station, the first signal described above may be an uplink reference signal in step S403. Optionally, the location management network element sends an NRPPa positioning information request (NRPPa POSITIONING INFORMATION REQUEST) message to the serving gNB to request the uplink information of the terminal device. The uplink information of the terminal device may be configuration information of the uplink reference signal, or may be other information. This is not limited in this application.

The configuration information of the uplink reference signal may include one or more of frequency domain information of the uplink reference signal, time domain information of the uplink reference signal, whether the uplink reference signal supports CA, and whether the uplink reference signal supports frequency hopping, or may include other information. This is not limited in this application.

It should be noted that the uplink reference signal is a reference signal that is sent by a transmitter (for example, a terminal device, for example, UE) and that can be used by a receiver (for example, a base station, for example, a gNB) to perform carrier phase measurement, and may be an existing uplink reference signal (for example, an UL-SRS) or another reference signal. This is not limited in this application. Similarly, a downlink reference signal is a reference signal that is sent by a transmitter (for example, a base station, for example, a gNB) and that can be used by a receiver (for example, a terminal device, for example, UE) to perform carrier phase measurement, and may be an existing downlink reference signal (for example, a DL-SRS) or another reference signal. This is not limited in this application.

The downlink reference signal may include one or more of a CSI-RS, a DMRS, a TRS, a PTRS and a PRS, where the PRS is dedicated to positioning. The uplink reference signal may include one or more of a DMRS, a PTRS, an SRS, and a pos-SRS. The pos-SRS is dedicated to positioning, and the SRS may be used for both positioning and MIMO.

Step S404: The serving gNB determines a configuration resource available for the uplink reference signal.

The uplink reference signal may be the UL-SRS, and all uplink reference signals in embodiments of this application may be UL-SRSs. This is uniformly described herein, and details are not described below again.

Step S405: The serving gNB sends the configuration information of the uplink reference signal to the terminal device.

The serving gNB may send the configuration information of the uplink reference signal to the terminal device by using a radio resource control (radio resource control, RRC) message.

Step S406: In response to step S403, the serving gNB sends a response message of the first request message to the location management network element, where the response message of the first request message includes the uplink information of the terminal device.

Optionally, the serving gNB provides the uplink information of the terminal device for the location management network element by using an NRPPa positioning information response (NRPPa POSITIONING INFORMATION RESPONSE) message. The uplink information of the terminal device may be the configuration information of the uplink reference signal.

Optionally, the configuration information of the uplink reference signal may be configuration information of the UL-SRS.

Step S407: When the uplink reference signal is configured as a semi-persistent or aperiodic uplink reference signal, the location management network element may request to activate transmission of the uplink reference signal of the terminal device. For example, the location management network element may send an NRPPa positioning activation request (NRPPa positioning activation request) message to the serving gNB of the terminal device to request to activate transmission of the uplink reference signal of the terminal device.

Step S408: The serving gNB sends activation indication information to the terminal device, where the activation indication information indicates to activate the terminal device, and further indicates the terminal device to start to send the uplink reference signal.

The terminal device may send the uplink reference signal by using one or more of an RRC message, a media access control (medium access control, MAC) control element CE (control element, CE), and downlink control information (downlink control information, DCI), or may send the uplink reference signal in another manner. This is not limited in this application.

Step S409: In response to step S307, the gNB sends an NRPPa positioning activation response (NRPPa positioning activation response) message. The terminal device starts to send the uplink reference signal based on a time-domain behavior of a resource configuration of the uplink reference signal.

The terminal device sends M uplink reference signals on N frequency resources $f_1$, $f_2$, ..., and $f_N$.

Optionally, the foregoing "frequency resource" is a segment of contiguous spectrum resources in frequency domain, and may include one or more of a subcarrier, a resource block (resource block, RB), a bandwidth part (bandwidth part, BWP), a component carrier (component carrier, CC), a frequency band or frequency segment (band, for example, a frequency band/frequency segment n41 (2515 MHz to 2675 MHz)), a frequency layer (frequency layer), a frequency point (frequency point), and a frequency range (frequency range, FR).

Distribution of the N frequency resources $f_1$, $f_2$, ..., and $f_N$ in frequency domain may include any one of the following distribution cases:

the N frequency resources $f_1$, $f_2$, ..., and $f_N$ all belong to a same carrier;
at least two frequency resources in the N frequency resources $f_1$, $f_2$, ..., and $f_N$ belong to different carriers but belong to a same frequency segment; and
the at least two frequency resources in the N frequency resources $f_1$, $f_2$, ..., and $f_N$ belong to different carriers and different frequency segments.

It may also be expressed as follows:
The at least two frequency resources in the N frequency resources $f_1$, $f_2$, ..., and $f_N$ are distributed on K carriers, where K is a positive integer greater than 1.

At least two carriers in the K carriers are non-contiguous in frequency domain, and/or the at least two carriers in the K carriers belong to different frequency bands or frequency segments.

In addition, the M uplink reference signals may be simultaneously sent by the terminal device, or may be not simultaneously sent by the terminal device. For example, the terminal device may simultaneously send the M uplink reference signals in a CA manner, the terminal device may separately send the M uplink reference signals at different frequency hopping moments in a frequency hopping manner, or the terminal device may send the M uplink reference signals in a combination of the two manners. This is not limited in this application.

It should be understood that step S407 to step S409 are optional. In addition, when the uplink reference signal is configured as the semi-persistent or aperiodic uplink reference signal, step S407 to step S409 may be performed, or step S407 to step S409 may not be performed.

Step S410: The location management network element sends uplink information to one or more gNBs participating in positioning.

The location management network element may select a quantity of gNBs based on different positioning requirements. For example, when a positioning requirement is distance measurement between the terminal device and a base station, uplink information needs to be sent to only one gNB; or when a positioning requirement is positioning of a specific location of the terminal device, uplink information needs to be sent to each of a plurality of gNBs. In addition, in different positioning methods, a quantity of required gNBs may also be different.

Optionally, the location management network element provides uplink information for a selected gNB or a gNB participating in positioning by using an NRPPa measurement request (NRPPa MEASUREMENT REQUEST) message. The uplink information includes configuration information of an uplink reference signal that is recommended by the location management network element to the gNB and that is used to perform uplink measurement, for example, a measurement cycle and a measurement quantity.

Step S411: The location management network element sends an assistance message to the terminal device. The assistance message may include an LPP provide assistance data (LPP provide assistance data) message. The message includes assistance data (for example, configuration information of the downlink reference signal) required for indicating the terminal device to perform necessary downlink reference signal measurement, and the assistance data is used for assistance measurement.

Optionally, the downlink reference signal includes a DL-PRS.

It should be understood that when the first device is the terminal device and the second device is the base station, the second signal described above may be the downlink reference signal in step S311.

Step S412: The location management network element sends a first message to the terminal device, where the first message is used to request first information from the terminal device.

The first message may be an LPP request location information (LPP request location information) message. In addition, the first message may alternatively be another message. This is not limited in this application.

The first information includes a positioning-related measurement result (for example, carrier phase measurement information of a second signal (for example, the downlink reference signal)). For a specific explanation of the first information, refer to the following description in step S415.

The gNB sends P downlink reference signals on the N frequency resources $f_1$, $f_2$, ..., and $f_N$.

Optionally, each of the one or more gNBs may send P downlink reference signals. Optionally, considering accuracy of phase measurement and location estimation, a preferred solution is that the terminal device and the gNB send reference signals back and forth on the N frequency resources $f_1$, $f_2$, ..., and $f_N$ in a round-trip manner. The round-trip manner is described in detail in step S413.

Step S413: The terminal device measures the downlink reference signal, including measuring downlink reference signals sent by all the gNBs in the assistance data provided in step S311.

The terminal device receives, on the N frequency resources $f_1$, $f_2$, ..., and $f_N$, the P downlink reference signals sent by each of the one or more gNBs, to obtain carrier phase measurement information of the P downlink reference signals.

The carrier phase measurement information of the P downlink reference signals may be any one of the following two cases:

1. a measured carrier phase value or an estimated carrier phase value of one or more downlink reference signals in the P downlink reference signals received by the terminal device on the N frequency resources $f_1$, $f_2$, ..., and $f_N$, for example, $\varphi(u, 1)$, $\varphi(u, 2)$, ..., and $\varphi(u, M)$; and
2. a difference between measured carrier phase values or estimated carrier phase values of one or more downlink reference signals in the P downlink reference signals received by the terminal device on any two frequency resources in the N frequency resources $f_1$, $f_2$, ..., and $f_N$.

The any two frequency resources in the N frequency resources may be two sequentially adjacent frequency resources for sending the reference signal.

Optionally, the terminal device receives the difference between the measured carrier phase values or the estimated carrier phase values of the one or more downlink reference signals in the P downlink reference signals on frequency resources adjacent in a sending sequence in the N frequency resources $f_1$, $f_2$, ..., and $f_N$.

A difference between measured carrier phase values of the P downlink reference signals and/or a difference between estimated carrier phase values of the P downlink reference signals may be all information of carrier phase measurement information of two groups of downlink reference signals (adjacent in a sending sequence), for example, $\varphi(u, 2)-\varphi(u, 1)$, $\varphi(u, 3)-\varphi(u, 2)$, $\varphi(u, 4)-\varphi(u, 3)$, ..., $\varphi(u, M)-\varphi(u, M-1)$, or $\varphi(u, 1)-\varphi(u, 2)$, $\varphi(u, 2)-\varphi(u, 3)$, $\varphi(u, 3)-\varphi(u, 4)$, ..., $\varphi(u, M-1)-\varphi(u, M)$, or may be partial information of carrier phase measurement information of two groups of downlink reference signals (adjacent in a sending sequence), for example, $\varphi(u, 2)-\varphi(u, 1)$, $\varphi(u, 4)-\varphi(u, 3)$, $\varphi(u, 6)-\varphi(u, 5)$, ..., $\varphi(u, M)-\varphi(u, M-1)$, or $\varphi(u, 1)-\varphi(u, 2)$, $\varphi(u, 3)-\varphi(u, 4)$, $\varphi(u, 5)-\varphi(u, 6)$, ..., $\varphi(u, M-1)-\varphi(u, M)$.

Considering accuracy of phase measurement and location estimation, the preferred solution is that the terminal device and the gNB send the reference signals back and forth on the N frequency resources $f_1$, $f_2$, ..., and $f_N$ in the round-trip manner.

For example, when the terminal device and the gNB send the reference signals back and forth on the N frequency resources $f_1$, $f_2$, ..., and $f_N$ in the frequency hopping manner, a specific process may be as follows:

The terminal device sends an uplink reference signal 1 on a frequency resource $f_1$. Optionally, the gNB sends a downlink reference signal 1 on the frequency resource $f_1$ when or after receiving the uplink reference signal 1, and the gNB obtains a carrier phase measurement quantity cp(b, 1) by measuring the uplink reference signal 1. When or after receiving the downlink reference signal 1, the terminal device sends an uplink reference signal 2 on a frequency resource $f_2$, and the terminal device obtains a carrier phase measurement quantity $\varphi(u, 1)$ by measuring the downlink reference signal 1. The reference signals are sent back and forth on the N frequency resources for a plurality of times.

It should be understood that the terminal device or the gNB may first send the reference signal. In this embodiment, an example in which the terminal device first sends the reference signal is used for description. However, this does not constitute a limitation.

Step S414: Each gNB that receives the uplink information in step S410 measures an uplink reference signal sent by the terminal device.

The gNB receives, on the N frequency resources $f_1$, $f_2$, ..., and $f_N$, the M uplink reference signals sent by the terminal device, and obtains carrier phase measurement information of the M uplink reference signals by measuring the M uplink reference signals. Optionally, distribution of the N frequency resources $f_1$, $f_2$, ..., and $f_N$ in frequency domain may include any one of the following distribution cases:

the N frequency resources $f_1$, $f_2$, ..., and $f_N$ all belong to the same carrier;
the at least two frequency resources in the N frequency resources $f_1$, $f_2$, ..., and $f_N$ belong to the different carriers but belong to the same frequency segment; and
the at least two frequency resources in the N frequency resources $f_1$, $f_2$, ..., and $f_N$ belong to the different carriers and the different frequency segments.

It may also be expressed as follows:

The at least two frequency resources in the N frequency resources $f_1$, $f_2$, ..., and $f_N$ are distributed on the K carriers, where K is a positive integer greater than 1.

The at least two carriers in the K carriers are non-contiguous in frequency domain, and/or the at least two carriers in the K carriers belong to different frequency bands or frequency segments.

The carrier phase measurement information of the M uplink reference signals may be any one of the following two cases:

1. a measured carrier phase value or an estimated carrier phase value of one or more uplink reference signals in the M uplink reference signals ($\varphi(b, 1)$, $\varphi(b, 2)$, ..., $\varphi(b, M)$) received by the gNB on the N frequency resources $f_1$, $f_2$, ..., and $f_N$; and
2. a difference ($\varphi(b, 2)-\varphi(b, 1)$, $\varphi(b, 3)-\varphi(b, 2)$, ..., $\varphi(b, M)-\varphi(b, M-1)$) between measured carrier phase values or estimated carrier phase values of one or more uplink reference signals, in the M uplink reference signals, received by the gNB on the any two frequency resources in the N frequency resources $f_1$, $f_2$, ..., and $f_N$. Optionally, the any two frequency resources in the N frequency resources may be the two sequentially adjacent frequency resources for sending the reference signal.

1. a measured carrier phase value or an estimated carrier phase value of one or more uplink reference signals in the M uplink reference signals received by the gNB on the N frequency resources $f_1$, $f_2$, ..., and $f_N$, for example, ($\varphi(b, 1)$, $\varphi(b, 2)$, ..., $\varphi(b, M)$); and
2. a difference between measured carrier phase values or estimated carrier phase values of one or more uplink reference signals, in the M uplink reference signals, received by the gNB on the any two frequency resources in the N frequency resources $f_1$, $f_2$, ..., and $f_N$.

The any two frequency resources in the N frequency resources may be the two sequentially adjacent frequency resources for sending the reference signal.

The gNB receives the difference between the measured carrier phase values or the estimated carrier phase values of the one or more uplink reference signals in the M uplink reference signals on the frequency resources adjacent in the sending sequence in the N frequency resources $f_1$, $f_2$, ..., and $f_N$.

A difference between measured carrier phase values of the M uplink reference signals and/or a difference between estimated carrier phase values of the M uplink reference signals may be all information of carrier phase measurement information of two groups of uplink reference signals (adjacent in the sending sequence), for example, φ(b, 2)-φ(b, 1), φ(b,3)-φ(b, 2), Φ(b, 4)-φ(b, 3), ..., φ(b, M)-φ(b, M-1), or φ(b, 1)-φ(b, 2), φ(b, 2)-φ(b, 3), φ(b, 3)-φ(b, 4), ..., φ(b, M-1)-φ(b, M), or may be partial information of carrier phase measurement information of two groups of uplink reference signals (adjacent in the sending sequence), for example, φ(b, 2)-φ(b, 1), φ(b, 4)-φ(b, 3), φ(b, 6)-φ(b, 5), ..., φ(b, M)-φ(b, M-1), or φ(b, 1)-φ(b, 2), φ(b, 3)-φ(b, 4), φ(b, 5)-φ(b, 6), ..., φ(b, M-1)-φ(b, M).

In addition, the M uplink reference signals may be simultaneously sent by the terminal device, or may be not simultaneously sent by the terminal device. For example, the terminal device may simultaneously send the M uplink reference signals in the CA manner, the terminal device may separately send the M uplink reference signals at different frequency hopping moments in the frequency hopping manner, or the terminal device may send the M uplink reference signals in the combination of the two manners. This is not limited in this application.

Step S415: In response to step S412, the terminal device sends a response message of the first message to the location management network element.

The response message of the first message may be an LPP provide location information (LPP Provide Location Information) message.

The response message of the first message includes the first information, and the first information includes the positioning-related measurement result (for example, the carrier phase measurement information of the second signal (for example, the downlink reference signal)). Specifically, the first information may include one or more of the carrier phase measurement information of the P downlink reference signals, and the first information further includes one or more of the following: a measurement time (timestamp) of carrier phase measurement information of the one or more downlink reference signals in the P downlink reference signals, and a measurement error of the carrier phase measurement information of the one or more downlink reference signals in the P downlink reference signals. In addition, the first information may further include other information. This is not limited in this application.

Optionally, the first information may be reported in any one of the following forms:

1. Absolute quantity of one or more carrier phase measurement quantities in the carrier phase measurement information of the P downlink reference signals.
For example, it is assumed that the carrier phase measurement information of the P downlink reference signals is a1, a2, a3, a4 (M=4). A reporting form in this case is: directly reporting carrier phase measurement information of the four downlink reference signals, for example, a1, a2, a3, a4 (M=4).

2. Absolute quantity+differential form of one carrier phase measurement quantity in the carrier phase measurement information of the P downlink reference signals.
For example, it is assumed that the carrier phase measurement information of the P downlink reference signals is a1, a2, a3, a4 (M=4). A reporting form in this case is: reporting carrier phase measurement information of one downlink reference signal and differences between carrier phase measurement information of the remaining downlink reference signals and the carrier phase measurement information of the downlink reference signal, for example, a1, a2-a1, a3-a1, and a4-a1.

3. Absolute quantity+proportion form of one carrier phase measurement quantity in the carrier phase measurement information of the P downlink reference signals.

For example, it is assumed that the carrier phase measurement information of the P downlink reference signals is a1, a2, a3, a4 (M=4). A reporting form in this case is: reporting carrier phase measurement information of one downlink reference signal and ratios of carrier phase measurement information of the remaining downlink reference signals to the carrier phase measurement information of the downlink reference signal, for example, a1, a2/a1, a3/a1, and a4/a1.

The terminal device may directly send the first information to the location management network element. A message carrier of the first information may be an LPP message. In addition, the message carrier of the first information may alternatively be another message. This is not limited in this application.

Optionally, before sending the first information to the location management network element, the terminal device may receive second information sent by the gNB. In this process, a carrier of the second information may be an RRC message, or may be another message. This is not limited in this application. After receiving the second information, the terminal device simultaneously sends or does not simultaneously send the first information and third information to the location management network element. A carrier of the first information and the third information may be an LPP message, or may be another message. This is not limited in this application.

Optionally, the third information may include the entire second information or a part of the second information, may include entire information or a part of information obtained by processing the entire second information or a part of the second information by the terminal device, or may include information obtained by processing the second information in another manner. This is not limited in this application.

Optionally, the terminal device may combine the first information and the third information into a new message, and then send the new message to the location management network element for positioning.

Step S416: In response to step S410, each gNB in step S414 sends a second message to the location management network element.

The second message may be an NRPPa measurement response (NRPPa MEASUREMENT RESPONSE) message.

The second message includes the second information, and the second information includes a positioning-related measurement result (for example, carrier phase measurement information of a first signal (for example, an uplink reference signal)). Specifically, the second information may include one or more of the carrier phase measurement information of the M uplink reference signals, and the second information further includes one or more of the following: a measurement time (timestamp) of carrier phase measurement information of the one or more uplink reference signals in the M uplink reference signals, and a measurement error of the carrier phase measurement information of the one or more uplink reference signals in the M uplink reference signals. In addition, the second information may further include other information. This is not limited in this application.

The carrier phase measurement information of the M uplink reference signals may be two cases. The two cases are described in detail in step S414. For brevity, details are not described herein again.

Optionally, the reporting form of the second information is described in detail in step S414. For brevity, details are not described herein again.

Optionally, a message carrier used by the gNB to send the second information to the location management network element may be an NRPPa message, an LPP message, or another message. This is not limited in this application.

Optionally, before sending the second information to the location management network element, the gNB may receive the first information sent by the terminal device. In this process, a carrier of the first information may be an RRC message, or may be another message. This is not limited in this application. After receiving the first information, the gNB simultaneously sends or does not simultaneously send the second information and fourth information to the location management network element. A carrier of the fourth information and the second information may be an LPP message, or may be another message. This is not limited in this application.

Optionally, the fourth information may include the entire first information or a part of the first information, may include entire information or a part of information obtained by processing the entire first information or a part of the first information by the gNB, or may include information obtained by processing the first information in another manner. This is not limited in this application.

Optionally, the gNB may combine the second information and the fourth information into a new message, and then send the new message to the location management network element for positioning.

Step S417: The location management network element sends an NRPPa positioning deactivation (NRPPa POSITIONING DEACTIVATION) message to the serving gNB.

Step S418: The location management network element calculates a location of the terminal device.

The location management network element calculates the location of the terminal device based on measurement information provided by the terminal device and the gNB in step S415 and step S416.

Optionally, a positioning unit (the location management network element in this embodiment) may obtain positioning assistance data from the second device (the base station in this embodiment, or UE, a TP/RP/TRP, or another unit). The positioning assistance data may include error information of the first information and/or the second information, for example, an error of a carrier phase measurement quantity of an uplink reference signal sent on the N frequency resources, or an error of a difference between carrier phase measurement quantities on two adjacent frequency resources.

It should be noted that a sequence of the foregoing steps S401 to S418 is merely a possible example, and a solution formed in another execution sequence of the foregoing steps S401 to S418 also falls within the protection scope of this application.

It should be noted that this embodiment of this application is described by using an example in which the first device is the terminal device, the second device is the gNB, and the network device is the location management network element (for example, the LMF). When the terminal device in this embodiment is replaced with another device included in the first device and/or the gNB in this embodiment is replaced with another device (for example, a TRP or an RP) included in the second device and/or the location management network element in this embodiment is replaced with another device included in the network device, a presented new specific embodiment also falls within the scope disclosed in this application, and only the interaction diagram in FIG. 4 needs to be replaced with a signaling interaction diagram corresponding to the new specific embodiment.

It should be noted that when both the first device and the second device are terminals, or both the first device and the second device are base stations, both the uplink information and downlink information in the embodiment shown in FIG. 4 need to be replaced with other information based on an actual requirement.

In this embodiment of this application, various errors including a synchronization error between a receiver and a transmitter, a phase difference between different carriers/channels, and a phase difference between a local oscillator signal of the receiver and a local oscillator signal of the transmitter can be eliminated by sending signals in the round-trip manner. In this way, a problem of phase inconsistency between reference signals received by the receiver can be effectively resolved, and high-precision positioning can be implemented. In addition, the location management network element is used as the positioning module to perform positioning, so that calculation complexity of the terminal device can be reduced, and power consumption of the terminal device can be effectively reduced.

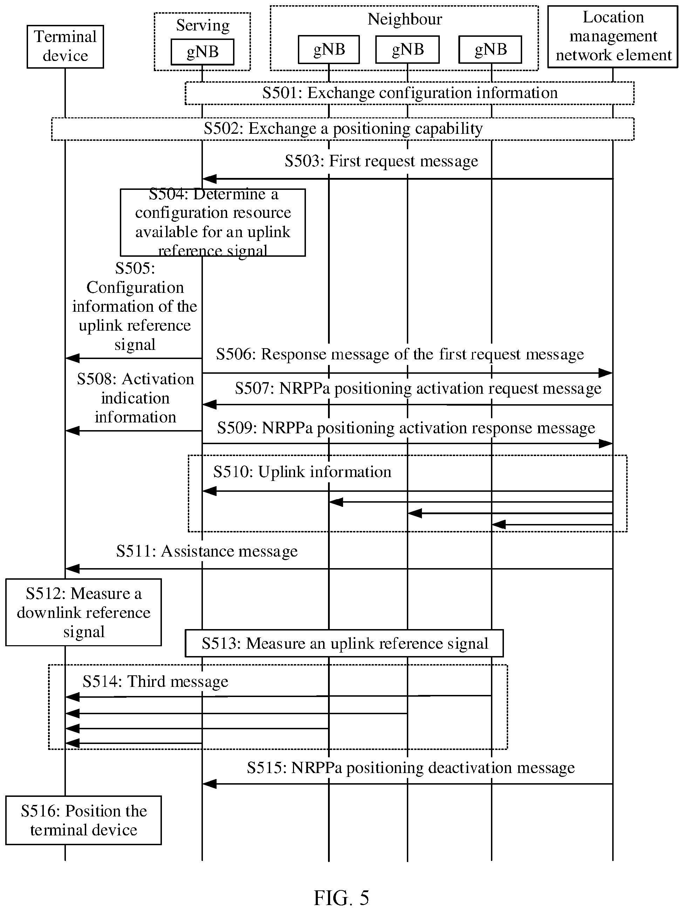

In parallel with the embodiment shown in FIG. 4, for example, FIG. 5 shows another communication method 500 according to this application. In this embodiment, an example in which a first device is a terminal device, and a second device is a gNB is used for description. In the embodiment shown in FIG. 4, the location management network element is used as the positioning module to perform positioning. Different from the embodiment shown in FIG. 4, in the method 500, the terminal device is used as a positioning module to perform positioning. As shown in FIG. 5, the method 500 includes the following steps.

Step S501 to step S511 are the same as step S401 to step S411 in the embodiment shown in FIG. 4. For brevity, details are not described herein again.

Step S512: The terminal device measures the downlink reference signal, including measuring downlink reference signals sent by all the gNBs in the assistance data provided in step S511.

The gNB sends P downlink reference signals on the N frequency resources $f_1$, $f_2$, ..., and $f_N$.

The terminal device receives, on the N frequency resources $f_1$, $f_2$, ..., and $f_N$, the P downlink reference signals sent by the gNB, to obtain carrier phase measurement information of the P downlink reference signals.

The carrier phase measurement information of the P downlink reference signals may be any one of the following two cases:

1. a measured carrier phase value or an estimated carrier phase value of one or more downlink reference signals in the P downlink reference signals received by the terminal device on the N frequency resources $f_1$, $f_2$, ..., and $f_N$, for example, $\varphi(u, 1)$, $\varphi(u, 2)$, ..., and $\varphi(u, M)$; and
2. a difference between measured carrier phase values or estimated carrier phase values of one or more downlink reference signals in the P downlink reference signals received by the terminal device on any two frequency resources in the N frequency resources $f_1$, $f_2$, ..., and $f_N$.

Optionally, the any two frequency resources in the N frequency resources may be two sequentially adjacent frequency resources for sending the reference signal.

Optionally, the terminal device receives the difference between the measured carrier phase values or the estimated carrier phase values of the one or more downlink reference signals in the P downlink reference signals on frequency resources adjacent in a sending sequence in the N frequency resources $f_1$, $f_2$, ..., and $f_N$.

The foregoing two cases have been described in detail in step S413 in the embodiment shown in FIG. 4. For brevity, details are not described herein again.

The terminal device and the gNB send reference signals back and forth on the N frequency resources $f_1$, $f_2$, ..., and $f_N$ in a round-trip manner. The round-trip manner has been described in detail in the embodiment shown in FIG. 4. For brevity, details are not described herein again.

Step S513: Each selected gNB in step S510 measures an uplink reference signal sent by the terminal device.

Optionally, before the gNB measures the uplink reference signal sent by the terminal device, the gNB receives, on the N frequency resources $f_1$, $f_2$, ..., and $f_N$, the M uplink reference signals sent by the terminal device, to obtain carrier phase measurement information of the M uplink reference signals. Distribution of the N frequency resources $f_1$, $f_2$, ..., and $f_N$ in frequency domain may include any one of the following distribution cases:

the N frequency resources $f_1$, $f_2$, ..., and $f_N$ all belong to the same carrier;
the at least two frequency resources in the N frequency resources $f_1$, $f_2$, ..., and $f_N$ belong to the different carriers but belong to the same frequency segment; and
the at least two frequency resources in the N frequency resources $f_1$, $f_2$, ..., and $f_N$ belong to the different carriers and the different frequency segments.

It may also be expressed as follows:

The at least two frequency resources in the N frequency resources $f_1$, $f_2$, ..., and $f_N$ are distributed on the K carriers, where K is a positive integer greater than 1.

The at least two carriers in the K carriers are non-contiguous in frequency domain, and/or the at least two carriers in the K carriers belong to different frequency bands or frequency segments.

Optionally, the carrier phase measurement information of the M uplink reference signals may be any one of the following two cases:

1. a measured carrier phase value or an estimated carrier phase value of one or more uplink reference signals in the M uplink reference signals (cp(b, 1), cp(b, 2), ..., cp(b, M)) received by the gNB on the N frequency resources

$f_1$, $f_2$, ..., and $f_N$; and

2. a difference (cp(b, 2)-cp(b, 1), cp(b, 3)-cp(b, 2), ..., cp(b, M)-cp(b, M-1)) between measured carrier phase values or estimated carrier phase values of one or more uplink reference signals, in the M uplink reference signals, received by the gNB on the any two frequency resources in the N frequency resources $f_1$, $f_2$, ..., and $f_N$. Optionally, the any two frequency resources in the N frequency resources may be the two sequentially adjacent frequency resources for sending the reference signal.

The foregoing two cases have been described in detail in step S414 in the embodiment shown in FIG. 4. For brevity, details are not described herein again.

In addition, optionally, the M uplink reference signals may be simultaneously sent by the terminal device, or may be not simultaneously sent by the terminal device. For example, the terminal device may simultaneously send the M uplink reference signals in the CA manner, the terminal device may separately send the M uplink reference signals at different frequency hopping moments in the frequency hopping manner, or the terminal device may send the M uplink reference signals in the combination of the two manners. This is not limited in this application.

Step S514: In response to step S510, each gNB in step S513 sends a third message to the first device.

The third message may be an NRPPa measurement response (NRPPa MEASUREMENT RESPONSE) message.

The third message further includes second information, and the second information includes a positioning-related measurement result (for example, carrier phase measurement information of a first signal (for example, an uplink reference signal)). Specifically, the second information may include one or more of the carrier phase measurement information of the M uplink reference signals, and the second information further includes one or more of the following: a measurement time (timestamp) of carrier phase measurement information of the one or more uplink reference signals in the M uplink reference signals, and a measurement error of the carrier phase measurement information of the one or more uplink reference signals in the M uplink reference signals. In addition, the second information may further include other information. This is not limited in this application.

The carrier phase measurement information of the M uplink reference signals may be any one of the following two cases:

1. a measured carrier phase value or an estimated carrier phase value of one or more uplink reference signals in the M uplink reference signals (cp(b, 1), $\varphi$(b, 2), ..., $\varphi$(b, M)) received by the gNB on the N frequency resources $f_1$, $f_2$, ..., and $f_N$; and

2. a difference (cp(b, 2)-$\varphi$(b, 1), cp(b, 3)-cp(b, 2), ..., cp(b, M)-cp(b, M-1)) between measured carrier phase values or estimated carrier phase values of one or more uplink reference signals, in the M uplink reference signals, received by the gNB on the any two frequency resources in the N frequency resources $f_1$, $f_2$, ..., and $f_N$. Optionally, the any two frequency resources in the N frequency resources may be the two sequentially adjacent frequency resources for sending the reference signal.

The foregoing two cases have been described in detail in step S414 in the embodiment shown in FIG. 4. For brevity, details are not described herein again.

Optionally, the reporting form of the second information is described in detail in step S414. For brevity, details are not described herein again.

Optionally, a message carrier used by the gNB to send the third message to the terminal device may be an NRPPa message, an RRC message, a sidelink message, or another message. This is not limited in this application.

Step S515: The location management network element sends an NRPPa positioning deactivation (NRPPa POSITIONING DEACTIVATION) message to the serving gNB.

Step S516: The terminal device performs positioning.

Optionally, before the terminal device performs positioning, the terminal device generates first information based on a received second signal (for example, a downlink reference signal). The first information includes a positioning-related measurement result (for example, carrier phase measurement information of the second signal (for example, the downlink reference signal)). Specifically, the first information may include one or more of the carrier phase measurement information of the P downlink reference signals, and the first information further includes one or more of the following: a measurement time (timestamp) of carrier phase measurement information of one or more downlink reference signals in the P downlink reference signals, and a measurement error of the carrier phase measurement information of the one or more downlink reference signals in the P downlink reference signals. In addition, the first information may further include other information. This is not limited in this application.

Optionally, the terminal device calculates a location of the terminal device based on the received second information and the generated first information and according to the positioning principle in the embodiment shown in FIG. 3.

It should be noted that a sequence of the foregoing steps S501 to S516 is merely a possible example, and a solution formed in another execution sequence of the foregoing steps S501 to S516 also falls within the protection scope of this application.

It should be noted that this embodiment of this application is described by using an example in which the first device is the terminal device, the second device is the gNB, and a network device is the location management network element (for example, an LMF). When the terminal device in this embodiment is replaced with another device included in the first device and/or the gNB in this embodiment is replaced with another device included in the second device and/or the location management network element in this embodiment is replaced with another device included in the network device, a presented new specific embodiment also falls within the scope disclosed in this application, and only the interaction diagram in FIG. 5 needs to be replaced with a signaling interaction diagram corresponding to the new specific embodiment.

It should be noted that when both the first device and the second device are terminals, or both the first device and the second device are base stations, both the uplink information and downlink information in the embodiment shown in FIG. 4 need to be replaced with parallel information.

In addition, it should be understood that when both the first device and the second device are terminal devices, the positioning module may be the first device, or may be the second device, or may not be the first device or the second device. Corresponding signaling interaction diagrams and specific steps are disclosed in the embodiments shown in FIG. 2(a) to FIG. 5. For brevity, details are not described herein again.

In this embodiment of this application, various errors including a synchronization error between a receiver and a transmitter, a phase difference between different carriers/channels, and a phase difference between a local oscillator signal of the receiver and a local oscillator signal of the transmitter can be eliminated by sending signals in a round-trip manner. In this way, a problem of phase inconsistency between reference signals received by the receiver can be effectively resolved, and high-precision positioning can be implemented. In addition, the terminal device is used as the positioning module, so that signaling between the terminal device and another network device unit can be reduced. This effectively reduces a positioning delay and positioning overheads.

It may be understood that the examples in FIG. 2(a) to FIG. 5 in embodiments of this application are merely intended to help a person skilled in the art understand embodiments of this application, but are not intended to limit embodiments of this application to specific scenarios in the examples. Definitely, a person skilled in the art can make various equivalent modifications or changes based on the examples shown in FIG. 2(a) to FIG. 5, and such modifications or changes also fall within the scope of embodiments of this application.

It should be further understood that the examples in FIG. 2(a) to FIG. 5 in embodiments of this application are merely examples for description, and the examples in the figures do not limit execution sequences. A person skilled in the art may flexibly adjust sequences of the steps based on the examples in the figures. In addition, the sequence numbers of the foregoing processes do not mean an execution sequence, and the execution sequence of the processes should be determined based on functions and internal logic of the processes. In addition, the foregoing steps are not mandatory steps. When one or more of the steps are missing, the problem to be resolved in the present invention can also be resolved, and the technical solutions corresponding to the steps also fall within the scope disclosed in this application.

It may be understood that, in some scenarios, some optional features in embodiments of this application may be independently implemented without depending on another feature, for example, a solution on which the optional features are currently based, to resolve a corresponding technical problem and achieve a corresponding effect. Alternatively, in some scenarios, the optional features are combined with other features based on requirements. Correspondingly, the apparatus provided in embodiments of this application may also correspondingly implement these features or functions. Details are not described herein.

It should be further understood that the solutions in embodiments of this application may be appropriately combined for use, and explanations or descriptions of terms in the embodiments may be mutually referenced or explained in the embodiments. This is not limited.

It should be further understood that sequence numbers of the foregoing processes do not mean an execution sequence in embodiments of this application. The execution sequences of the processes should be determined based on functions and internal logic of the processes. Various numerical numbers or sequence numbers in the foregoing processes are merely distinguished for ease of description, and should not constitute any limitation on the implementation processes of embodiments of this application.

In the foregoing embodiments provided in this application, various solutions of the communication method provided in embodiments of this application are separately described from perspectives of each device/network element and interaction between devices/network elements. It may be understood that, to implement the foregoing functions, each network element or device includes a corresponding hardware structure and/or a corresponding software module for performing each function. A person skilled in the art should easily be aware that, in combination with units and algorithm steps of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

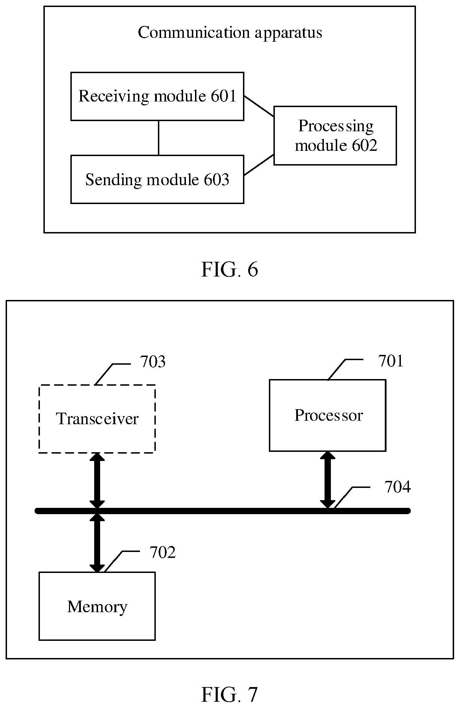

FIG. 6 is a block diagram of a communication apparatus 600 according to an embodiment of this application. The apparatus 600 includes a receiving module 601, and the receiving module 601 may be configured to implement a corresponding receiving function. The receiving module 601 may also be referred to as a receiving unit.

The apparatus 600 further includes a processing module 602. The processing module 602 may be configured to implement a corresponding processing function, for example, obtain measured carrier phase values of M first signals.

The apparatus 600 further includes a sending module 603. The sending module 603 may be configured to implement a corresponding sending function, and the sending module 603 may also be referred to as a sending unit.

Optionally, the apparatus 600 further includes a storage unit, and the storage unit may be configured to store instructions and/or data. The processing module 602 may read the instructions and/or the data in the storage unit, so that the apparatus implements actions related to the apparatus in the foregoing method embodiments.

The apparatus 600 may be configured to perform an action performed by a first device (for example, a terminal device), a second device (for example, a terminal device or a gNB), or a network device (for example, an LMF) in the foregoing method embodiments. In this case, the apparatus 600 may be the first device, the second device, or the network device, or the receiving module 601 may be a component of the first device, the second device, or the network device. The receiving module 601 is configured to perform a receiving-related operation of the first device, the second device, or the network device in the foregoing method embodiments, the processing module 602 is configured to perform a processing-related operation of the first device, the second device, or the network device in the foregoing method embodiments, and the sending module 603 is configured to perform a sending-related operation of the first device, the second device, or the network device in the foregoing method embodiments.

In a design, the apparatus 600 is configured to perform actions performed by any network element or any device in the foregoing method embodiments. In an embodiment, the communication apparatus may be configured to perform operations of the first device (for example, the terminal device) in FIG. 2(a) to FIG. 5. For example, the receiving module 601 is configured to receive, on N frequency resources, P second signals sent by a second device, where the P second signals are sent by the second device in response to the M first signals. The receiving module 601 is further configured to receive second information sent by the second device, where the second information includes one or more of carrier phase measurement information of the M first signals, the carrier phase measurement information of the M first signals is used by the first device to perform positioning, N, M, and P are positive integers, M is greater than or equal to N, and P is greater than or equal to N.

It should be understood that, a value relationship between M and P is not limited. M may be greater than P, M may be less than P, or M may be equal to P.

A carrier of the second information may be a radio resource control (radio resource control, RRC) message, a sidelink (sidelink) message, or another message. This is not limited in this application.

When the first device sends one first signal on each frequency resource, M is equal to N. When the first device sends two or more first signals on at least one frequency resource, M is greater than N.

The foregoing "frequency resource" is a segment of contiguous spectrum resources in frequency domain, and may include one or more of a subcarrier, a resource block (resource block, RB), a bandwidth part (bandwidth part, BWP), a component carrier (component carrier, CC), a frequency band or frequency segment (band, for example, a frequency band/frequency segment n41 (2515 MHz to 2675 MHz)), a frequency layer (frequency layer), a frequency point (frequency point), and a frequency range (frequency range, FR).

The M first signals are used for positioning, and the M first signals include one or more of a positioning reference signal PRS, a sounding reference signal SRS, a positioning sounding reference signal pos-SRS, a tracking reference signal (tracking reference signal, TRS), a channel state information-reference signal (channel state information-reference signal, CSI-RS), a demodulation reference signal (demodulation reference signal, DMRS), a phase tracking reference signal (phase noise tracking reference signal, PTRS), and a sidelink reference signal.

The P second signals are used for positioning, and the P second signals include one or more of a positioning reference signal PRS, a sounding reference signal SRS, a positioning sounding reference signal pos-SRS, a tracking reference signal (tracking reference signal, TRS), a channel state information-reference signal (channel state information-reference signal, CSI-RS), a demodulation reference signal (demodulation reference signal, DMRS), a phase tracking reference signal (phase noise tracking reference signal, PTRS), and a sidelink reference signal.

Optionally, the M first signals and/or the P second signals may alternatively be other signals. This is not limited in this application.

The first device may be the terminal device, and the second device may be the terminal device or a base station.

The carrier phase measurement information of the M first signals includes a measured carrier phase value or an estimated carrier phase value of one or more first signals in the M first signals received by the second device on the N frequency resources; and/or when N is greater than 1, the carrier phase measurement information of the M first signals includes a difference between measured carrier phase values or estimated carrier phase values of one or more first signals in the M first signals received by the second device on any two frequency resources in the N frequency resources.

The second information may further include one or more of the following: a measurement time of carrier phase measurement information of the one or more first signals, and a measurement error of the carrier phase measurement information of the one or more first signals.

Optionally, the second information may further include other information. This is not limited in this application.

Optionally, the first device may be one or more antennas in a plurality of antennas of the first device.

The receiving module 601 may be further configured to receive one or more pieces of identification information. The one or more pieces of identification information include a measured carrier phase value or an estimated carrier phase value of one or more second signals in the P second signals, and/or the one or more pieces of identification information include a difference between measured carrier phase values or estimated carrier phase values of one or more second signals in the P second signals. The any two frequency resources in the N frequency resources may be two frequency resources adjacent in a sequence for sending a reference signal.

At least two frequency resources in the N frequency resources are distributed on K carriers, where K is a positive integer greater than 1.

Optionally, at least two carriers in the K carriers are non-contiguous in frequency domain.

Optionally, the at least two carriers in the K carriers belong to different frequency bands or frequency segments.

The processing module 602 is configured to obtain measured carrier phase values or estimated carrier phase values of the P second signals based on the P second signals.

The sending module 603 is configured to send the M first signals on the N frequency resources, and is further configured to send first information, where the first information includes one or more of carrier phase measurement information of the P second signals, the carrier phase measurement information of the P second signals is used for positioning, and P is a positive integer.

The M first signals are used for positioning, and the M first signals include one or more of a positioning reference signal PRS, a sounding reference signal SRS, a positioning sounding reference signal pos-SRS, a tracking reference signal (tracking reference signal, TRS), a channel state information-reference signal (channel state information-reference signal, CSI-RS), a demodulation reference signal (demodulation reference signal, DMRS), a phase tracking reference signal (phase noise tracking reference signal, PTRS), and a sidelink reference signal.

The carrier phase measurement information of the P second signals includes a measured carrier phase value or an estimated carrier phase value of one or more second signals in the P second signals received by the first device on the N frequency resources, and/or

the carrier phase measurement information of the P second signals includes a difference between measured carrier phase values or estimated carrier phase values of one or more second signals, in the P second signals, received by the first device on the any two frequency resources in the N frequency resources, where the any two frequency resources in the N frequency resources are frequency resources adjacent in a sending sequence.

At least two frequency resources in the N frequency resources are distributed on K carriers, where K is a positive integer greater than 1.

Optionally, at least two carriers in the K carriers are non-contiguous in frequency domain.

Optionally, the at least two carriers in the K carriers belong to different frequency bands or frequency segments.

Optionally, the first information further includes one or more of the following: a measurement time of carrier phase measurement information of the one or more second signals, and a measurement error of the carrier phase measurement information of the one or more second signals.

It should be understood that a specific process in which the modules perform the foregoing corresponding steps has been described in detail in the foregoing method embodiments. For brevity, details are not described herein again.

In addition, the receiving module 601, the processing module 602, and the sending module 603 in the communication apparatus may further implement other operations or functions of the first device in the foregoing method. Details are not described herein again.

In another embodiment, the communication apparatus may be configured to perform operations of the second device (for example, the gNB) in FIG. 2(a) to FIG. 5. For example, the receiving module 601 is configured to receive the M first signals sent by a first device, and is further configured to receive first information sent by the first device, where the first information includes one or more of carrier phase measurement information of P second signals, the carrier phase measurement information of the P second signals is used for positioning, N, M, and P are positive integers, M is greater than or equal to N, and P is greater than or equal to N.

A message carrier of the first information may be a sidelink (sidelink) message, a radio resource control (radio resource control, RRC) message, or another message. This is not limited in this application.

The foregoing "frequency resource" is a segment of contiguous spectrum resources in frequency domain, and may include one or more of a subcarrier, a resource block (resource block, RB), a bandwidth part (bandwidth part, BWP), a component carrier (component carrier, CC), a frequency band or frequency segment (band, for example, a frequency band/frequency segment n41 (2515 MHz to 2675 MHz)), a frequency layer (frequency layer), a frequency point (frequency point), and a frequency range (frequency range, FR).

The M first signals are used for positioning, and the M first signals include one or more of a positioning reference signal PRS, a sounding reference signal SRS, a positioning sounding reference signal pos-SRS, a tracking reference signal (tracking reference signal, TRS), a channel state information-reference signal (channel state information-reference signal, CSI-RS), a demodulation reference signal (demodulation reference signal, DMRS), a phase tracking reference signal (phase noise tracking reference signal, PTRS), and a sidelink reference signal.

The P second signals are used for positioning, and the P second signals include one or more of a positioning reference signal PRS, a sounding reference signal SRS, a positioning sounding reference signal pos-SRS, a tracking reference signal (tracking reference signal, TRS), a channel state information-reference signal (channel state information-reference signal, CSI-RS), a demodulation reference signal (demodulation reference signal, DMRS), a phase tracking reference signal (phase noise tracking reference signal, PTRS), and a sidelink reference signal.

Optionally, the M first signals and/or the P second signals may alternatively be other signals. This is not limited in this application.

The carrier phase measurement information of the P second signals includes a measured carrier phase value or an estimated carrier phase value of one or more second signals in the P second signals received by the first device on N frequency resources; and/or the carrier phase measurement information of the P second signals includes a difference between measured carrier phase values or estimated carrier phase values of one or more second signals, in the P second signals, received by the first device on any two frequency resources in the N frequency resources.

At least two frequency resources in the N frequency resources are distributed on K carriers, where K is a positive integer greater than 1.

Optionally, at least two carriers in the K carriers are non-contiguous in frequency domain.

Optionally, the at least two carriers in the K carriers belong to different frequency bands or frequency segments.

Optionally, the first information further includes one or more of the following: a measurement time of carrier phase measurement information of the one or more second signals, and a measurement error of the carrier phase measurement information of the one or more second signals.

Optionally, the first information may further include other information. This is not limited in this application.

The processing module 602 is configured to obtain measured carrier phase values or estimated carrier phase values of the M first signals based on the M first signals.

The sending module 603 is configured to send the P second signals on the N frequency resources, where the P second signals are sent by the second device in response to the M first signals. The sending module 603 is further configured to send second information, where the second information includes one or more of carrier phase measurement information of the M first signals, the carrier phase measurement information of the M first signals is used for positioning, N, M, and P are positive integers, M is greater than or equal to N, and P is greater than or equal to N.

It should be understood that, a value relationship between M and P is not limited. M may be greater than P, M may be less than P, or M may be equal to P.

A carrier of the second information may be a radio resource control (radio resource control, RRC) message, a sidelink (sidelink) message, or another message. This is not limited in this application.

When the first device sends one first signal on each frequency resource, M is equal to N. When the first device sends two or more first signals on at least one frequency resource, M is greater than N.

The foregoing "frequency resource" is a segment of contiguous spectrum resources in frequency domain, and may include one or more of a subcarrier, a resource block (resource block, RB), a bandwidth part (bandwidth part, BWP), a component carrier (component carrier, CC), a frequency band or frequency segment (band, for example, a frequency band/frequency segment n41 (2515 MHz to 2675 MHz)), a frequency layer (frequency layer), a frequency point (frequency point), and a frequency range (frequency range, FR).

The M first signals are used for positioning, and the M first signals include one or more of a positioning reference signal PRS, a sounding reference signal SRS, a positioning sounding reference signal pos-SRS, a tracking reference signal (tracking reference signal, TRS), a channel state information-reference signal (channel state information-reference signal, CSI-RS), a demodulation reference signal (demodulation reference signal, DMRS), a phase tracking reference signal (phase noise tracking reference signal, PTRS), and a sidelink reference signal.

The P second signals are used for positioning, and the P second signals include one or more of a positioning reference signal PRS, a sounding reference signal SRS, a positioning sounding reference signal pos-SRS, a tracking reference signal (tracking reference signal, TRS), a channel state information-reference signal (channel state information-reference signal, CSI-RS), a demodulation reference signal (demodulation reference signal, DMRS), a phase tracking reference signal (phase noise tracking reference signal, PTRS), and a sidelink reference signal.

Optionally, the M first signals and/or the P second signals may alternatively be other signals. This is not limited in this application.

The carrier phase measurement information of the M first signals includes a measured carrier phase value or an estimated carrier phase value of one or more first signals in the M first signals received by the second device on the N frequency resources; and/or when N is greater than 1, the carrier phase measurement information of the M first signals includes a difference between measured carrier phase values or estimated carrier phase values of one or more first signals, in the M first signals, received by the second device on the any two frequency resources in the N frequency resources.

Optionally, the second information further includes one or more of the following: a measurement time of carrier phase measurement information of the one or more first signals, and a measurement error of the carrier phase measurement information of the one or more first signals.

Optionally, the second information may further include other information. This is not limited in this application.

Optionally, the first device may be one or more antennas in a plurality of antennas of the first device.

The sending module 603 may be further configured to send one or more pieces of identification information. The one or more pieces of identification information include the measured carrier phase value or the estimated carrier phase value of the one or more second signals in the P second signals, and/or the one or more pieces of identification information include the difference between the measured carrier phase values or the estimated carrier phase values of the one or more second signals in the P second signals. The any two frequency resources in the N frequency resources may be two frequency resources adjacent in a sequence for sending a reference signal.

At least two frequency resources in the N frequency resources are distributed on K carriers, where K is a positive integer greater than 1.

Optionally, at least two carriers in the K carriers are non-contiguous in frequency domain.

Optionally, the at least two carriers in the K carriers belong to different frequency bands or frequency segments.

In addition, the receiving module 601, the processing module 602, and the sending module 603 in the communication apparatus may further implement other operations or functions of the second device in the foregoing method. Details are not described herein again.

It should be understood that a specific process in which the modules perform the foregoing corresponding steps has been described in detail in the foregoing method embodiments. For brevity, details are not described herein again.

In addition, the receiving module 601, the processing module 602, and the sending module 603 in the communication apparatus may further implement operations or functions of the network device (for example, a location management network element (for example, an LMF)) in the foregoing method. Details are not described herein again.

FIG. 7 is a diagram of another possible structure of a communication apparatus in the foregoing embodiments. The communication apparatus includes a processor 701. As shown in FIG. 7, the communication apparatus may further include at least one memory 702, configured to store program instructions and/or data. The memory 702 is coupled to the processor 701. The coupling in this embodiment of this application may be an indirect coupling or a communication connection between apparatuses, units, or modules in an electrical form, a mechanical form, or another form, and is used for information exchange between the apparatuses, the units, or the modules. The processor 701 and the memory 702 may cooperatively operate. The processor 701 may execute the program instructions stored in the memory 702. At least one of the at least one memory may be included in the processor.

The communication apparatus may further include a transceiver 703, configured to communicate with another device through a transmission medium, so that the apparatus may communicate with the another device. Optionally, the transceiver 703 may be an interface, a bus, a circuit, or an apparatus that can implement receiving and sending functions. Optionally, the transceiver 703 may include a receiver and a transmitter.

A specific connection medium between the processor 701, the memory 702, and the transceiver 703 is not limited in embodiments of this application. In this embodiment of this application, the processor 701, the memory 702, and the transceiver 703 are connected to each other through a bus 704 in FIG. 7. The bus is represented by using a bold line in FIG. 7, and a connection manner between other components is merely described as an example, and is not limited thereto. The bus may be classified into an address bus, a data bus, a control bus, and the like. For ease of representation, only one bold line is used for representation in FIG. 7, but this does not mean that there is only one bus or only one type of bus.

For example, in an embodiment, the processor 701 is configured to perform another operation or function of a first device. The transceiver 703 is configured to implement communication between the communication apparatus and another network element/device (for example, a gNB/LMF).

In another embodiment, the processor 701 is configured to perform another operation or function of a second device. The transceiver 703 is configured to implement communication between the communication apparatus and another network element/device (for example, UE/LMF).

In another embodiment, the processor 701 is configured to perform another operation or function of a network device. The transceiver 703 is configured to implement communication between the communication apparatus and another network element/device (for example, UE/gNB).

In another embodiment, the processor 701 is configured to perform another operation or function of a first device or a second device. The transceiver 703 is configured to implement communication between the communication apparatus and another network element/device (for example, an SLP\SMF\E-SMLC).

One or more of the foregoing modules or units may be implemented by using software, hardware, or a combination thereof. When any one of the foregoing modules or units is implemented by software, the software exists in a form of computer program instructions, and is stored in the memory. The processor may be configured to execute the program instructions and implement the foregoing method procedure. The processor may include but is not limited to, at least one of a central processing unit (central processing unit, CPU), a microprocessor, a digital signal processor (DSP), a microcontroller unit (microcontroller unit, MCU), and a computing device used for running software like an artificial intelligence processor. Each computing device may include one or more cores used to execute software instructions to perform operations or processing. The processor may be built in a SoC (system on a chip) or an application-specific integrated circuit (application-specific integrated circuit, ASIC), or may be an independent semiconductor chip. In addition to the cores used to execute the software instructions to perform operations or processing, the processor may further include a necessary hardware accelerator, for example, a field programmable gate array (field programmable gate array, FPGA), a PLD (programmable logic device), or a logic circuit implementing dedicated logical operation.

When the foregoing modules or units are implemented by hardware, the hardware may be any one of or any combination of a CPU, a microprocessor, a DSP, an MCU, an artificial intelligence processor, an ASIC, a SoC, an FPGA, a PLD, a dedicated digital circuit, a hardware accelerator, or a non-integrated discrete device. The hardware may run necessary software to execute the foregoing method procedure or execute the foregoing method procedure without software.

When the foregoing modules or units are implemented by software, all or some of the foregoing modules or units may be implemented in a form of a computer program product. The computer program product includes one or more computer instructions. When the computer program instructions are loaded and executed on a computer, the procedures or functions according to embodiments of the present invention are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example a DVD), a semiconductor medium (for example, a solid-state disk (solid-state disk, SSD)), or the like.

In the foregoing specific implementations, the objectives, technical solutions, and beneficial effects of this application are further described in detail. It should be understood that the foregoing descriptions are merely specific implementations of this application, but are not intended to limit the protection scope of this application. Any modification, equivalent replacement, improvement, or the like made based on the technical solutions of this application shall fall within the protection scope of this application.

According to the method provided in embodiments of this application, this application further provides a computer program product. The computer program product includes computer program code. When the computer program code is run on a computer, the computer is enabled to perform the method on the first device side in the foregoing method embodiment.

According to the method provided in embodiments of this application, this application further provides a computer program product. The computer program product includes computer program code. When the computer program code is run on a computer, the computer is enabled to perform the method on the second device side in the foregoing method embodiment.

According to the method provided in embodiments of this application, this application further provides a computer program product. The computer program product includes computer program code. When the computer program code is run on a computer, the computer is enabled to perform the method on the network device side in the foregoing method embodiment.

According to the method provided in embodiments of this application, this application further provides a computer-readable medium. The computer-readable medium stores program code. When the program code is run on a computer, the computer is enabled to perform the method on the first device side in the foregoing method embodiment.

According to the method provided in embodiments of this application, this application further provides a computer-readable medium. The computer-readable medium stores program code. When the program code is run on a computer, the computer is enabled to perform the method on the second device side in the foregoing method embodiment.

According to the method provided in embodiments of this application, this application further provides a computer-readable medium. The computer-readable medium stores program code. When the program code is run on a computer, the computer is enabled to perform the method on the network device side in the foregoing method embodiment.

An embodiment of this application further provides a processing apparatus, including a processor and an interface. The processor is configured to perform the communication method in any one of the foregoing method embodiments.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technologies, or some of the technical solutions may be implemented in a form of a software product. The software product is stored in a storage medium, and includes several instructions for instructing a computer device (which may be a personal computer, a server, or a network device) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, wherein the method comprises:

   sending, by a first device, M first signals on N frequency resources;
   receiving, by the first device on the N frequency resources, P second signals sent by a second device, wherein the P second signals are signals responding to the M first signals; and
   receiving, by the first device, second information sent by the second device, wherein the second information comprises one or more of carrier phase measurement information of the M first signals, the carrier phase measurement information of the M first signals is used for positioning, N, M, and P are positive integers, M is greater than or equal to N, and P is greater than or equal to N.

2. The method according to claim 1, wherein the method further comprises:
   performing, by the first device, positioning.

3. The method according to claim 1, wherein the method further comprises:

sending, by the first device, first information, wherein the first information comprises one or more of carrier phase measurement information of the P second signals, and the carrier phase measurement information of the P second signals is used for positioning.

4. The method according to claim 3, wherein the method further comprises:
sending, by the first device, third information, wherein the third information comprises a part of the second information or the entire second information, or the third information comprises a part of processed second information or entire processed second information.

5. The method according to any one of claims 1 to 4, wherein the carrier phase measurement information of the M first signals comprises a measured carrier phase value or an estimated carrier phase value of one or more first signals in the M first signals received by the second device on the N frequency resources, and/or
when N is greater than 1, the carrier phase measurement information of the M first signals comprises a difference between measured carrier phase values or estimated carrier phase values of one or more first signals in the M first signals received by the second device on any two frequency resources in the N frequency resources.

6. The method according to any one of claims 3 to 5, wherein the carrier phase measurement information of the P second signals comprises a measured carrier phase value or an estimated carrier phase value of one or more second signals in the P second signals received by the first device on the N frequency resources, and/or
when N is greater than 1, the carrier phase measurement information of the P second signals comprises a difference between measured carrier phase values or estimated carrier phase values of one or more second signals, in the P second signals, received by the first device on any two frequency resources in the N frequency resources.

7. The method according to claim 6, wherein the any two frequency resources in the N frequency resources are two sequentially adjacent frequency resources for sending the first signal.

8. The method according to any one of claims 1 to 5, wherein the sending, by a first device, M first signals on N frequency resources comprises:
simultaneously sending, by the first device, the M first signals on the N frequency resources.

9. The method according to any one of claims 1 to 8, wherein M is equal to P.

10. The method according to any one of claims 3 to 9, wherein the first information further comprises one or more of the following: a measurement time of carrier phase measurement information of one or more second signals, and a measurement error of the carrier phase measurement information of the one or more second signals.

11. The method according to any one of claims 1 to 10, wherein the second information further comprises one or more of the following: a measurement time of carrier phase measurement information of one or more first signals, and a measurement error of the carrier phase measurement information of the one or more first signals.

12. The method according to any one of claims 1 to 11, wherein when N is greater than 1, at least two frequency resources in the N frequency resources are distributed on K carriers, wherein K is a positive integer greater than 1.

13. The method according to claim 12, wherein at least two carriers in the K carriers are non-contiguous in frequency domain.

14. The method according to claim 12 or 13, wherein the at least two carriers in the K carriers belong to different frequency bands or frequency segments.

15. The method according to any one of claims 1 to 14, wherein the M first signals are used for positioning, and the M first signals comprises one or more of a positioning reference signal PRS, a sounding reference signal SRS, a positioning sounding reference signal pos-SRS, a tracking reference signal TRS, a channel state information-reference signal CSI-RS, a demodulation reference signal DMRS, a phase tracking reference signal PTRS, and a sidelink reference signal.

16. The method according to any one of claims 1 to 15, wherein the P second signals are used for positioning, and the P second signals comprises one or more of a positioning reference signal PRS, a sounding reference signal SRS, a positioning sounding reference signal pos-SRS, a tracking reference signal TRS, a channel state information-reference signal CSI-RS, a demodulation reference signal DMRS, a phase noise tracking reference signal PTRS, and a sidelink reference signal.

17. The method according to any one of claims 1 to 16, wherein the first device comprises a terminal device.

18. A communication method, wherein the method comprises:

receiving, by a network device, first information, wherein the first information comprises one or more of carrier phase measurement information of P second signals, the carrier phase measurement information of the P second signals is used for positioning, and P is a positive integer;
receiving, by the network device, second information, and/or receiving, by the network device, third information, wherein the second information comprises one or more of carrier phase measurement information of M first signals, the carrier phase measurement information of the M first signals is used for positioning, and M is a positive integer; and the third information comprises a part of the second information or the entire second information, or the third information comprises a part of processed second information or entire processed second information; and
performing, by the network device, positioning based on the first information and at least one of the second information and the third information.

19. The method according to claim 18, wherein the carrier phase measurement information of the P second signals comprises a measured carrier phase value or an estimated carrier phase value of one or more second signals in the P second signals received by a first device on N frequency resources, and/or
when N is greater than 1, the carrier phase measurement information of the P second signals comprises a difference between measured carrier phase values or estimated carrier phase values of one or more second signals, in the P second signals, received by the first device on any two frequency resources in the N frequency resources.

20. The method according to claim 18 or 19, wherein the carrier phase measurement information of the M first signals comprises a measured carrier phase value or an estimated carrier phase value of one or more first signals in the M first signals received by a second device on the N frequency resources, and/or
when N is greater than 1, the carrier phase measurement information of the M first signals comprises a difference between measured carrier phase values or estimated carrier phase values of one or more first signals in the M first signals received by the second device on the any two frequency resources in the N frequency resources.

21. The method according to claim 19 or 20, wherein the any two frequency resources in the N frequency resources are sequentially adjacent frequency resources for sending the first signal or the second signal.

22. The method according to any one of claims 18 to 21, wherein M is equal to P.

23. The method according to any one of claims 18 to 22, wherein the first information further comprises one or more of the following: a measurement time of carrier phase measurement information of one or more second signals, and a measurement error of the carrier phase measurement information of the one or more second signals.

24. The method according to any one of claims 18 to 23, wherein the second information further comprises one or more of the following: a measurement time of carrier phase measurement information of one or more first signals, and a measurement error of the carrier phase measurement information of the one or more first signals.

25. The method according to any one of claims 18 to 24, wherein when N is greater than 1, at least two frequency resources in the N frequency resources are distributed on K carriers, wherein K is a positive integer greater than 1.

26. The method according to claim 25, wherein at least two carriers in the K carriers are non-contiguous in frequency domain.

27. The method according to claim 25 or 26, wherein the at least two carriers in the K carriers belong to different frequency bands or frequency segments.

28. The method according to any one of claims 18 to 27, wherein the M first signals are used for positioning, and the M first signals comprises one or more of a positioning reference signal PRS, a sounding reference signal SRS, a positioning sounding reference signal pos-SRS, a tracking reference signal TRS, a channel state information-reference signal CSI-RS, a demodulation reference signal DMRS, a phase tracking reference signal PTRS, and a sidelink reference signal.

29. The method according to any one of claims 18 to 28, wherein the P second signals are used for positioning, and the P second signals comprises one or more of a positioning reference signal PRS, a sounding reference signal SRS, a positioning sounding reference signal pos-SRS, a tracking reference signal TRS, a channel state information-reference signal CSI-RS, a demodulation reference signal DMRS, a phase tracking reference signal PTRS, and a sidelink reference signal.

30. The method according to any one of claims 18 to 29, wherein the network device comprises a location management network element.

31. A communication apparatus, wherein the apparatus comprises:

a sending module, configured to send M first signals on N frequency resources; and
a receiving module, configured to receive, on the N frequency resources, P second signals sent by a second device, wherein the P second signals are signals responding to the M first signals, wherein
the receiving module is further configured to receive second information sent by the second device, wherein the second information comprises one or more of carrier phase measurement information of the M first signals, the carrier phase measurement information of the M first signals is used for positioning, N, M, and P are positive integers, M is greater than or equal to N, and P is greater than or equal to N.

32. The apparatus according to claim 31, wherein the apparatus further comprises:
a positioning module, configured to perform positioning.

33. The apparatus according to claim 31, wherein the sending module is further configured to:
send first information, wherein the first information comprises one or more of carrier phase measurement information of the P second signals, and the carrier phase measurement information of the P second signals is used for positioning.

34. The apparatus according to claim 33, wherein the sending module is further configured to:
send third information, wherein the third information comprises a part of the second information or the entire second information, or the third information comprises a part of processed second information or entire processed second information.

35. The apparatus according to any one of claims 31 to 34, wherein the carrier phase measurement information of the M first signals comprises a measured carrier phase value or an estimated carrier phase value of one or more first signals in the M first signals received by the second device on the N frequency resources, and/or
when N is greater than 1, the carrier phase measurement information of the M first signals comprises a difference between measured carrier phase values or estimated carrier phase values of one or more first signals in the M first signals received by the second device on any two frequency resources in the N frequency resources.

36. The apparatus according to any one of claims 33 to 35, wherein the carrier phase measurement information of the P second signals comprises a measured carrier phase value or an estimated carrier phase value of one or more second signals in the P second signals received by the receiving module on the N frequency resources, and/or
when N is greater than 1, the carrier phase measurement information of the P second signals comprises a difference between measured carrier phase values or estimated carrier phase values of one or more second signals, in the P second signals, received by the receiving module on the any two frequency resources in the N frequency resources.

37. The apparatus according to claim 36, wherein the any two frequency resources in the N frequency resources are two sequentially adjacent frequency resources for sending the first signal.

38. The apparatus according to any one of claims 31 to 35, wherein the sending module is specifically configured to:
simultaneously send the M first signals on the N frequency resources.

39. The apparatus according to any one of claims 31 to 38, wherein M is equal to P.

40. The apparatus according to any one of claims 33 to 39, wherein the first information further comprises one or more of the following: a measurement time of carrier phase measurement information of one or more second signals, and a measurement error of the carrier phase measurement information of the one or more second signals.

41. The apparatus according to any one of claims 31 to 40, wherein the second information further comprises one or more of the following: a measurement time of carrier phase measurement information of one or more first signals, and a measurement error of the carrier phase measurement information of the one or more first signals.

42. The apparatus according to any one of claims 31 to 41, wherein when N is greater than 1, at least two frequency resources in the N frequency resources are distributed on K carriers, wherein K is a positive integer greater than 1.

43. The apparatus according to claim 42, wherein at least two carriers in the K carriers are non-contiguous in frequency domain.

44. The apparatus according to claim 42 or 43, wherein the at least two carriers in the K carriers belong to different frequency bands or frequency segments.

45. The apparatus according to any one of claims 31 to 44, wherein the M first signals are used for positioning, and the M first signals comprises one or more of a positioning reference signal PRS, a sounding reference signal SRS, a positioning sounding reference signal pos-SRS, a tracking reference signal TRS, a channel state information-reference signal CSI-RS, a demodulation reference signal DMRS, a phase tracking reference signal PTRS, and a sidelink reference signal.

46. The apparatus according to any one of claims 31 to 45, wherein the P second signals are used for positioning, and the P second signals comprises one or more of a positioning reference signal PRS, a sounding reference signal SRS, a positioning sounding reference signal pos-SRS, a tracking reference signal TRS, a channel state information-reference signal CSI-RS, a demodulation reference signal DMRS, a phase tracking reference signal PTRS, and a sidelink reference signal.

47. A communication apparatus, wherein the apparatus comprises:

a receiving module, configured to receive first information, wherein the first information comprises one or more of carrier phase measurement information of P second signals, the carrier phase measurement information of the P second signals is used for positioning, and P is a positive integer, wherein
the receiving module is further configured to receive second information, and/or receive third information, wherein the second information comprises one or more of carrier phase measurement information of M first signals, the carrier phase measurement information of the M first signals is used for positioning, and M is a positive integer; and the third information comprises a part of the second information or the entire second information, or the third information comprises a part of processed second information or entire processed second information; and a positioning module, configured to perform positioning based on the first information and at least one of the second information and the third information.

48. The apparatus according to claim 47, wherein the carrier phase measurement information of the P second signals comprises a measured carrier phase value or an estimated carrier phase value of one or more second signals in the P second signals received by a first device on N frequency resources, and/or
when N is greater than 1, the carrier phase measurement information of the P second signals comprises a difference between measured carrier phase values or estimated carrier phase values of one or more second signals, in the P second signals, received by the first device on any two frequency resources in the N frequency resources.

49. The apparatus according to claim 47 or 48, wherein the carrier phase measurement information of the M first signals comprises a measured carrier phase value or an estimated carrier phase value of one or more first signals in the M first signals received by a second device on the N frequency resources, and/or
when N is greater than 1, the carrier phase measurement information of the M first signals comprises a difference between measured carrier phase values or estimated carrier phase values of one or more first signals in the M first signals received by the second device on the any two frequency resources in the N frequency resources.

50. The apparatus according to claim 47 or 49, wherein the any two frequency resources in the N frequency resources are sequentially adjacent frequency resources for sending the first signal or the second signal.

**51.** The apparatus according to any one of claims 47 to 50, wherein M is equal to P.

**52.** The apparatus according to any one of claims 47 to 51, wherein the first information further comprises one or more of the following: a measurement time of carrier phase measurement information of one or more second signals, and a measurement error of the carrier phase measurement information of the one or more second signals.

**53.** The apparatus according to any one of claims 47 to 52, wherein the second information further comprises one or more of the following: a measurement time of carrier phase measurement information of one or more first signals, and a measurement error of the carrier phase measurement information of the one or more first signals.

**54.** The apparatus according to any one of claims 47 to 53, wherein when N is greater than 1, at least two frequency resources in the N frequency resources are distributed on K carriers, wherein K is a positive integer greater than 1.

**55.** The apparatus according to claim 54, wherein at least two carriers in the K carriers are non-contiguous in frequency domain.

**56.** The apparatus according to claim 54 or 55, wherein the at least two carriers in the K carriers belong to different frequency bands or frequency segments.

**57.** The apparatus according to any one of claims 47 to 56, wherein the M first signals are used for positioning, and the M first signals comprises one or more of a positioning reference signal PRS, a sounding reference signal SRS, a positioning sounding reference signal pos-SRS, a tracking reference signal TRS, a channel state information-reference signal CSI-RS, a demodulation reference signal DMRS, a phase tracking reference signal PTRS, and a sidelink reference signal.

**58.** The apparatus according to any one of claims 47 to 57, wherein the P second signals are used for positioning, and the P second signals comprises one or more of a positioning reference signal PRS, a sounding reference signal SRS, a positioning sounding reference signal pos-SRS, a tracking reference signal TRS, a channel state information-reference signal CSI-RS, a demodulation reference signal DMRS, a phase tracking reference signal PTRS, and a sidelink reference signal.

**59.** The apparatus according to any one of claims 47 to 58, wherein the communication apparatus comprises a location management network element.

**60.** A computer-readable storage medium, wherein the storage medium stores a computer program or instructions, and when the program or the instructions are run, the method according to any one of claims 1 to 17 is implemented, or the method according to any one of claims 18 to 30 is implemented.

**61.** A chip system, comprising a processor, configured to: invoke a computer program from a memory and run the computer program, so that a communication device on which the chip system is installed performs the method according to any one of claims 1 to 17, or performs the method according to any one of claims 18 to 30.

**62.** A computer program product, wherein the computer program product comprises computer program code, and when the computer program code is run on a computer, the method according to any one of claims 1 to 17 is implemented, or the method according to any one of claims 18 to 30 is implemented.

FIG. 1

FIG. 2(a)

First device | Second device

S201b: M first signals sent on N frequency resources

S202b: P second signals received on the N frequency resources

S203b: First information

S204b: Perform positioning

FIG. 2(b)

First device | Second device

S201c: M first signals sent on N frequency resources

S202c: P second signals received on the N frequency resources

S203c: Second information

S204c: Perform positioning

FIG. 2(c)

EP 4 460 047 A1

First device

fk

F(k+1)

TX    RX    S305    TX    RX

S301    S303    S306

RX    S302    TX    S304    RX    TX

Second device

Switch to f(k+2), repeat S301 to S305, and the rest may be deduced by analogy

A plurality of carrier phase measurement quantities obtained on a plurality of frequency resources

A plurality of carrier phase measurement quantities obtained on a plurality of frequency resources

FIG. 3

FIG. 4

FIG. 5

Communication apparatus

Receiving module 601 —— Processing module 602

Sending module 603

FIG. 6

703

Transceiver

701

Processor

704

702

Memory

FIG. 7

## INTERNATIONAL SEARCH REPORT

| International application No. |
| --- |
| **PCT/CN2023/072038** |

**A.   CLASSIFICATION OF SUBJECT MATTER**

H04W 4/02(2018.01)i

According to International Patent Classification (IPC) or to both national classification and IPC

**B.   FIELDS SEARCHED**

Minimum documentation searched (classification system followed by classification symbols)

IPC:H04W,H04Q,H04L,H04M

Documentation searched other than minimum documentation to the extent that such documents are included in the fields searched

Electronic data base consulted during the international search (name of data base and, where practicable, search terms used)

CNABS, CNTXT, WPABS, WPABSC, ENTXT, ENTXTC, CJFD, 3GPP: 频率, 载波, 相位, 测量, 定位, 差, frequency, carrier?, phase, measur+, position+, difference

**C.   DOCUMENTS CONSIDERED TO BE RELEVANT**

| Category* | Citation of document, with indication, where appropriate, of the relevant passages | Relevant to claim No. |
| --- | --- | --- |
| X | WO 2021227821 A1 (DATANG MOBILE COMMUNICATIONS EQUIPMENT CO., LTD.) 18 November 2021 (2021-11-18) description, p. 12, line 18 to p. 30, line 9 | 1-2, 5-9, 15, 31-32, 35-39, 45, 60-62 |
| X | WO 2021042852 A1 (DATANG MOBILE COMMUNICATIONS EQUIPMENT CO., LTD.) 11 March 2021 (2021-03-11) description, p. 4, line 19 to p. 23, line 18 | 1-2, 5-9, 15, 31-32, 35-39, 45, 60-62 |
| X | CN 112543160 A (DATANG MOBILE COMMUNICATIONS EQUIPMENT CO., LTD.) 23 March 2021 (2021-03-23) description, paragraphs [0036]-[0236] | 1-2, 5-9, 15, 31-32, 35-39, 45, 60-62 |
| A | CN 111435159 A (TELECOMMUNICATIONS TECHNOLOGY RESEARCH INSTITUTE CO., LTD.) 21 July 2020 (2020-07-21) entire description | 1-62 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **23 April 2023** | **25 April 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/072038**

| Patent document cited in search report | | | Publication date (day/month/year) | Patent family member(s) | | | Publication date (day/month/year) |
|---|---|---|---|---|---|---|---|
| WO | 2021227821 | A1 | 18 November 2021 | EP | 4152774 | A1 | 22 March 2023 |
| | | | | TW | 202145814 | A | 01 December 2021 |
| | | | | TWI | 778607 | B | 21 September 2022 |
| WO | 2021042852 | A1 | 11 March 2021 | TW | 202112107 | A | 16 March 2021 |
| | | | | TWI | 740543 | B | 21 September 2021 |
| CN | 112543160 | A | 23 March 2021 | None | | | |
| CN | 111435159 | A | 21 July 2020 | WO | 2020143403 | A1 | 16 July 2020 |
| | | | | TW | 202027546 | A | 16 July 2020 |
| | | | | TWI | 717184 | B | 21 January 2021 |
| | | | | EP | 3910364 | A1 | 17 November 2021 |
| | | | | EP | 3910364 | A4 | 01 June 2022 |
| | | | | JP | 2022517070 | A | 04 March 2022 |
| | | | | JP | 7225414 | B2 | 20 February 2023 |
| | | | | US | 2022082652 | A1 | 17 March 2022 |
| | | | | KR | 20210113345 | A | 15 September 2021 |

Form PCT/ISA/210 (patent family annex) (July 2022)

**EP 4 460 047 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210114728